# EUROPEAN PATENT APPLICATION

(11) **EP 4 676 101 A1**
(43) Date of publication of application: **07.01.2026**
(21) Application number: 24818332.9
(22) Date of filing: 20.03.2024
(51) Int. Cl.: H04W 4/16, H04W 36/00

(54) **COMMUNICATION METHOD AND APPARATUS, AND CHIP**

(30) Priority: 06.06.2023 CN 202310665208
(71) Applicant: Honor Device Co., Ltd., Shenzhen, Guangdong 518040 (CN)
(72) Inventor: LI, Haibo, Shenzhen, Guangdong 518040 (CN); LUO, Fei, Shenzhen, Guangdong 518040 (CN); XUE, Chao, Shenzhen, Guangdong 518040 (CN)
(74) Representative: Thun, Clemens
(86) International application number: PCT/CN2024/082716
(87) International publication number: WO 2024/250795

(57) **Abstract**

The present invention relates to the field of mobile communication technologies, and discloses a communication method, an apparatus, and a chip. The method includes: detecting that an electronic device is handed over from a first cell to a second cell; initiating a first communication cell update request; and in response to a call hold condition being satisfied, holding a calling state of the electronic device, where the call hold condition includes that the electronic device is currently in the calling state. This method can reduce a call drop probability of a terminal device.

## Description

This application claims priority to Chinese Patent Application No. 2023106652084, filed with the China National Intellectual Property Administration on June 6, 2023 and entitled "COMMUNICATION METHOD, APPARATUS, AND CHIP", which is incorporated herein by reference in its entirety.

### TECHNICAL FIELD

The present invention relates to the field of mobile communication technologies, and in particular, to a communication method, an apparatus, and a chip.

### BACKGROUND

When a terminal device moves to a new cell (a cell identifier is a physical cell identifier (physical cell identifier, PCI)), if a tracking area code (tracking area code, TAC) corresponding to the new cell belongs to a new TAC list (TAC LIST), where to be specific, the new TAC list does not belong to a TAC list previously registered by the terminal device, it indicates that the terminal device is no longer within coverage of a network that is previously registered, and the terminal device needs to initiate a tracking area update (tracking area update, TAU) procedure to a core network, so that the core network updates location information of a new tracking area (tracking area, TA) in which the terminal device is located.

For example, in a process of performing a call using a terminal device, a user quickly moves between edges of a plurality of cells. If the terminal device moves from a cell A to a cell B, and TACs corresponding to the cell A and the cell B respectively belong to different TAC LISTs, the terminal device initiates a TAU request to the core network. If a problem exists on a link of a switching path from the cell A to the cell B, the core network does not respond to the TAU request initiated by the terminal device, and after the terminal device resends the TAU request, the core network rejects, according to a reason #9 or a reason #10, the TAU request sent by the terminal device again. According to the protocol S 24.301, after the terminal device is rejected according to the reason #9 or the reason #10, the terminal device initiates an attach (attach) procedure to the core network, to re-register on the core network, and to obtain a new default bearer (including a service transmission channel). In this case, because configuration parameters of the default bearer re-obtained by the terminal device is inconsistent with configuration parameters of a previous default bearer, a dedicated bearer linked to the previous default bearer cannot be recovered, and the current call is implemented based on the previous default bearer and the previous dedicated bearer, after the terminal device initiates the attach procedure, current call data may not be transmitted, in other words, the call may be completely interrupted, and in other words, a call drop occurs.

### SUMMARY

Embodiments of the present invention provides a communication method, an apparatus, and a chip, to reduce call drops of a terminal device.

According to a first aspect, the present invention provides a communication method, applied to an electronic device. The method includes: detecting that the electronic device is handed over from a first cell to a second cell; initiating a first communication cell update request; and in response to a call hold condition being satisfied, holding a calling state of the electronic device, where the call hold condition includes that the electronic device is currently in the calling state.

According to the foregoing communication method, after the first communication cell update request (that is, a first TAU request) is initiated, the terminal device is kept in a calling state, thereby avoiding a subsequent call drop because the first communication cell update request is not responded.

In a possible implementation of the first aspect, the call hold condition further includes: within preset duration of a timer T3430, a message indicating that the first communication cell update request is responded is not received, where the first communication cell update request includes a first tracking area update request, and the timer T3430 is configured to time the first communication cell update request.

According to the foregoing communication method, when determining that the message indicating that the first communication cell update request is responded is not received within the preset duration of the timer T3430, the current calling state is maintained, thereby avoiding a subsequent call drop because the first communication cell update request is not responded.

In a possible implementation of the first aspect, the call hold condition further includes: transmission and reception of data packets of the call being normal.

According to the foregoing communication method, a call connection is maintained when it is determined that transmission and reception of data packets in the calling state is normal, so that the current call can be maintained in a status of good call quality, thereby avoiding a subsequent call drop because the first communication cell update request is not responded.

In a possible implementation of the first aspect, the method further includes: in response to the call hold condition being not satisfied, performing local release and sending a second communication cell update request (in other words, a TAU request after the first TAU request) in advance.

According to the foregoing communication method, when the current status does not satisfy the call hold condition, local release is performed and the second communication cell update request is sent in advance, so that the second communication cell update request can be sent earlier, duration in which the terminal device is normally connected to the core network is reduced, and the current calling state is maintained.

In a possible implementation of the first aspect, the sending a second communication cell update request in advance includes: reducing a set value of a timer T3411, where the timer T3430 is configured to set time for sending the second communication cell update request.

According to the foregoing communication method, by reducing the set value of the timer T3411, the second communication cell update request can be sent earlier, duration in which the terminal device is normally connected to the core network is reduced, and the current calling state is also maintained.

In a possible implementation of the first aspect, that the call hold condition is not satisfied includes: the first communication cell update request is not responded, and the electronic device is not currently in the calling state; or the first communication cell update request is not responded, the electronic device is currently in the calling state, and transmission and reception of data packets of the call is abnormal.

In a possible implementation of the first aspect, the method further includes: in response to the second communication cell update request being accepted, setting a penalty level of a path through which the first cell is switched to the second cell to a first penalty level; and in response to the second communication cell update request being not accepted, setting the penalty level of the path through which the first cell is switched to the second cell to a second penalty level, where the second penalty level is higher than the first penalty level, and a higher penalty level indicates a lower probability of the path being used.

According to the foregoing communication method, the penalty level of the path through which the first cell is switched to the second cell is set based on whether the second communication cell update request is accepted or not accepted, so that the communication status of the path through which the first cell is switched to the second cell can be recorded, and can provide a reference for next cell switching.

In a possible implementation of the first aspect, the method further includes: when detecting that the calling state of the electronic device ends, determining an ending manner of the calling state; in response to the ending manner of the calling state being normally hanging up, setting a penalty level of a path through which the first cell is switched to the second cell to a third penalty level; and in response to the ending manner of the calling state being abnormally hanging up, setting the penalty level of the path through which the first cell is switched to the second cell to a fourth penalty level, where the fourth penalty level is higher than the third penalty level, and a higher penalty level indicates a lower probability of the path being used.

According to the foregoing communication method, the penalty level of the path through which the first cell is switched to the second cell is set based on an ending manner of the calling state of the electronic device, so that the communication status of the path through which the first cell is switched to the second cell can be recorded, or and can provide a reference for next cell switching of the terminal device.

In a possible implementation of the first aspect, the penalty level is for adjusting a measured report value of reference signal received power used by the electronic device in a cell switching process.

According to the foregoing communication method, the measured report value of the reference signal received power used by the electronic device in the cell switching process is adjusted based on the penalty level, to provide a reference for next cell switching of the terminal device.

In a possible implementation of the first aspect, the holding a calling state of the electronic device includes: suspending sending a second communication cell update request.

According to the foregoing communication method, sending of the second communication cell update request may be suspended in the current calling state, to avoid a subsequent call drop because the second communication cell update request is rejected.

In a possible implementation of the first aspect, the suspending sending a second communication cell update request includes: adjusting a value of a set value of a timer T3430 from a first preset value to a second preset value, where the second preset value is greater than a statistical average value of call duration.

According to the foregoing communication method, the set value of the timer T3430 is increased, so that a first communication cell update procedure can be maintained, thereby avoiding a subsequent call drop because the first communication cell update is not responded.

In a possible implementation of the first aspect, the in response to a call hold condition being satisfied, holding a calling state of the electronic device includes: holding an RRC connection of the electronic device, skipping performing local release, and skipping starting a timer T3411.

According to the foregoing communication method, in the calling state of the electronic device, the current calling state can be maintained by holding the RRC connection, skipping performing local release, and skipping starting the timer T3411, so that the current calling state does not enter a silent state, and the first communication cell update procedure can also be maintained.

In a possible implementation of the first aspect, the method further includes: in correspondence to the first communication cell update request being not responded to or being rejected and a path through which the first cell is switched to the second cell being not in an abnormal switching path list, adding the path through which the first cell is switched to the second cell to the abnormal switching path list, where during communication, a probability of selecting a path in the abnormal switching path list is less than a probability of selecting a path that is not in the abnormal switching path list.

According to the foregoing communication method, the path through which the first cell is switched to the second cell may be added to the abnormal switching path list based on cases in which the first communication cell update request is not responded and is rejected, to provide a reference basis for subsequent cell switching.

In a possible implementation of the first method, the method further includes:
in response to the first communication cell update request being received and the path through which the first cell is switched to the second cell being in the abnormal switching path list, removing, from the abnormal switching path list, the path through which the first cell is switched to the second cell.

According to the foregoing communication method, the path through which the first cell is switched to the second cell may be removed from the abnormal switching path list based on a case in which the first communication cell update request is received, to provide a reference basis for subsequent cell switching.

According to a second aspect, an embodiment of the present invention provides a communication apparatus, including one or more processors and one or more memories. The one or more memories are coupled to the one or more processors, the one or more memories are configured to store computer program code, the computer program code includes computer instructions, and when the one or more processors execute the computer instructions, the apparatus is enabled to perform any communication method according to the first aspect and the various possible implementations of the first aspect.

According to a third aspect, an embodiment of the present invention provides a chip. The chip includes a processor, and the processor executes computer instructions stored in a computer storage medium, to enable the electronic device to implement any communication method according to the various possible implementations of the first aspect.

According to a fourth aspect, an embodiment of the present invention provides a readable storage medium. The readable storage medium stores instructions, and the instructions, when executed on the electronic device, enable the electronic device to implement any communication method according to the various possible implementations of the first aspect.

According to a fifth aspect, an embodiment of the present invention provides an electronic device. The electronic device includes: a memory, configured to store instructions to be executed by one or more processors of the electronic device, and a processor, being one of the processors of the electronic device and configured to execute the instructions stored in the memory to implement any communication method according to the various possible implementations of the first aspect.

According to a sixth aspect, an embodiment of the present invention provides a program product. The program product includes instructions, and when the instructions are executed by an electronic device, the electronic device is enabled to implement any communication method according to the various possible implementations of the first aspect.

### BRIEF DESCRIPTION OF DRAWINGS

FIG. 1 is a schematic diagram of a communication scenario of a terminal device according to some embodiments of the present invention;
FIG. 2 is a schematic diagram of a structure of a tracking area according to some embodiments of the present invention;
FIG. 3 is a schematic diagram of a TAU procedure initiated by a terminal device according to some embodiments of the present invention;
FIG. 4 is a schematic flowchart of a call drop of a terminal device according to some embodiments of the present invention;
FIG. 5A is a schematic method flowchart of a communication method according to some embodiments of the present invention;
FIG. 5B is a schematic method flowchart of another communication method according to some embodiments of the present invention;
FIG. 6A is a schematic method flowchart of another communication method according to some embodiments of the present invention;
FIG. 6B is a schematic method flowchart of another communication method according to some embodiments of the present invention;
FIG. 7 is a schematic method flowchart of another communication method according to some embodiments of the present invention;
FIG. 8 is a schematic method flowchart of another communication method according to some embodiments of the present invention;
FIG. 9 is a schematic method flowchart of another communication method according to some embodiments of the present invention;
FIG. 10 is a schematic method flowchart of another communication method according to some embodiments of the present invention;
FIG. 11 is a schematic diagram of a hardware structure of a terminal device according to some embodiments of the present invention; and
FIG. 12 is a schematic diagram of a composition structure of a network device according to some embodiments of the present invention.

### DESCRIPTION OF EMBODIMENTS

To make the objective, technical solutions, and advantages of embodiments of this application clearer, the technical solutions in embodiments of this application are clearly and completely described below with reference to accompanying drawings in embodiments of this application.

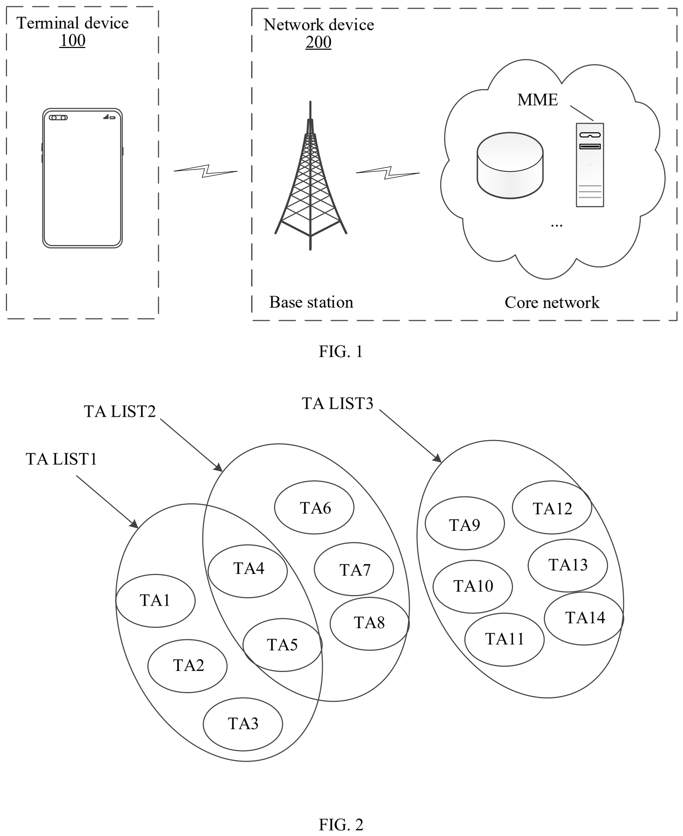

The following describes the technical solutions of the present invention with reference to FIG. 1 to FIG. 12.

FIG. 1 is a schematic diagram of a communication scenario of a terminal device 100 in a communication system.

As shown in FIG. 1, a terminal device 100 may obtain, by connecting to a network device 200, resources allocated by a core network, for example, obtain resources allocated by a long term evolution (LTE) network, to perform mobile services, including services such as initiating a call, obtaining video resources, and obtaining audio resources by using voice on long term evolution (voice on long term evolution, VoLTE) based on an internet protocol multimedia subsystem (internet protocol multimedia subsystem, SMS).

The network device 200 may include a 4G base station and a 4G core network (evolved packet core, EPC) device. The 4G base station is connected to the EPC device, and there may be one or more 4G base stations and EPC devices. The EPC device may include a mobility management entity (mobility management entity, MME). As a key control node of a 3GPP LTE access network, the MME is mainly configured to provide access control, mobility management, attachment and detachment, session management, and the like for the terminal device 100, and is responsible for locating a terminal device 100, for example, a user equipment (user equipment, UE), in an idle state and a calling process, including relaying, in other words, is responsible for the signaling processing part.

In an LTE network, to determine a location of a terminal device, a coverage area of the LTE network is divided into many tracking areas (tracking areas, TAs). The TA is identified by using a TA code. When a UE is in an idle state, the EPC device may obtain a TA in which the UE is located. In addition, when the UE in the idle state needs to be paged, the EPC device may page all cells in the TA in which the UE is registered. Each TA may include one or more cells, and each cell belongs to only one TA. It may be understood that, a cell may be a minimum signal coverage range with a unique public land mobile network (public land mobile network, PLMN) frequency and a unique physical cell identifier (physical cell identifier, PCI).

As described above, when the terminal device moves to a new cell, if a tracking area identifier corresponding to the new cell belongs to a new TAC LIST, in other words, does not belong to a TAC LIST registered by the terminal device, the terminal needs to initiate a TAU procedure to the core network, to update location information of the new TA in which the terminal device is located. As shown in FIG. 2, a plurality of tracking areas may form a tracking area list (tracking area list, TA LIST). TA LIST1, TA LIST2, and TA LIST3 each may include a plurality of TAs. Two adjacent TA LISTs may further include a common TA. For example, TA LIST1 may include TA1, TA2, TA3, TA4, and TA5, TA LIST2 may include TA4, TA5, TA6, TA7, and TA8, and TA LIST3 may include TA9, TA10, TA11, TA12, TA13, and TA14. In this case, TA4 and TA5 are common TAs of TA LIST1 and TA LIST2.

It may be understood that TAs in a same TA LIST are allocated to one UE at the same time, and the UE does not need to perform TAU when moving in the TA LIST, to reduce frequent interactions with the network. However, when the UE enters a new TA, if a TAC of the new TA is not in a TA LIST of a network registered by the UE, location registration needs to be performed on the new TA to notify the core network to change previously stored location information, that is, a TAU process is performed. An EPC device such as an MME re-allocates a group of TAs in the TA LIST to the UE. When the UE needs to be paged, the network sends paging to the UE in a cell included in the re-allocated TA LIST. The newly allocated TAs may also include some TAs in the original TA LIST.

As described in the background, if there is a problem in switching between two cells, the core network may not respond to the TAU procedure initiated when the terminal device moves between the two cells. In addition, after the core network rejects a TAU procedure initiated by the terminal device again, because the terminal device will initiate an attach procedure, the terminal device may not be able to continue to obtain, by using a previous default bearer, resources provided by the core network to maintain a call, and the terminal device may possibly undergo a call drop.

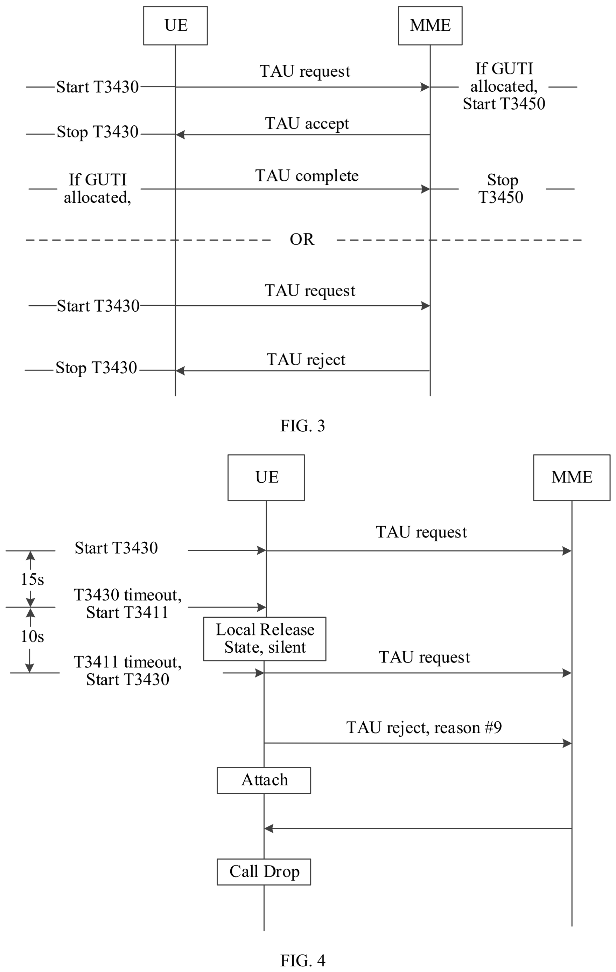

The following describes a TAU procedure and a procedure of a call drop of a terminal device with reference to FIG. 3 and FIG. 4.

As shown in FIG. 3, according to the definition in TS 24.301 developed by the 3rd generation partnership project (3rd generation partnership project, 3GPP), the TAU procedure may include the following steps:
A UE first sends a TAU request (tracking area update request) to an EPC device such as an MME, and starts a timer T3430 at the same time. A set value of the timer T3430 may be 15s, and after the timer T3430 expires, the UE gives up the TAU procedure.

In a possible case, after receiving the TAU request, if the MME accepts the TAU request, the MME allocates a new globally unique temporary UE identity (globally unique temporary UE identity, GUTI) to the UE, starts a timer 3450, and sends a TAU accept (tracking area update accept) message to the UE. When receiving the TAU accept message, the UE stops the timer T3430, and replies a TAU complete (tracking area update complete) message to the MME. After receiving the TAU complete message, the MME stops the timer T3450, to complete the GUTI procedure.

In another possible case, after receiving the TAU request, if the MME rejects the TAU request, the MME sends a TAU reject (tracking area update reject) message to the UE. When receiving the TAU reject message, the UE stops the timer T3430, that is, the TAU fails.

It may be understood that, reasons for the TAU failure may include that a signal of the network device 200 is poor, a quantity of devices attached to the network device 200 is large, interference between the terminal device 100 and the network device 200 is large, the terminal device 100 does not support a current-located public land mobile network (public land mobile network, PLMN), a service option requested by the terminal device 100 is not configured in the current-located PLMN, and the like. The reason for the TAU failure is not specifically limited in this embodiment of this application.

As shown in FIG. 4, a procedure of a call drop of a UE during a call may be as follows: The UE is in a calling state, and if the UE moves to a new cell, and a TAC corresponding to the new cell is not in an original TAC LIST, the UE initiates a TAU procedure to the MME. For example, when the UE is handed over between cells in XX midtown 9720-111907329, if the UE moves from a cell with a physical cell identifier (physical cell identifier, PCI) 93 to a cell with a PCI 124, because TACs of the two cells belong to different TAC LISTs, the UE initiates the TAU procedure to the MME, and starts a timer T3430 at the same time. According to the TS 24.301 protocol, T3430 may last for 15s.

If there is a problem in a link for switching from the PCI 93 cell to the PCI 124 cell or there is abnormal communication due to another reason, the MME does not respond to a TAU request initiated by the UE. The UE initiates local release after the timer T3430 expires, and starts a timer T3411 at the same time. It may be understood that, according to the protocol, during local release, the UE is in a silent state in which the UE neither receives a signal nor transmits a signal. The T3411 may last for 10s, and the UE initiates the TAU procedure again after the timer T3411 expires. Because of abnormal communication of switching from the PCI 93 cell to the PCI 124 cell, the MME cannot obtain context information of the UE and cannot identify the UE, and consequently, the MME rejects the TAU procedure initiated by the UE again. The core network may initiate a TAU reject message to the UE according to a reason #9 (the network cannot identify the user, namely, the UE), or may initiate a TAU reject message to the UE according to a reason #10 (implicitly detached (implicitly detached)), to indicate the UE to initiate an attach procedure.

For the network, a solution of rejecting, according to the reason #9 or the reason #10, the TAU procedure initiated by the UE again is to no longer attempt the TAU procedure. According to the protocol, the UE sends an attach request carrying a configuration parameter corresponding to a current service to the MME, to obtain a new default bearer, to maintain a connection between the terminal and the core network. Because the UE probably cannot maintain a calling state based on a current default bearer, finally, the call process may be completely interrupted, that is, a call drop occurs in the UE.

In view of this, to avoid a case in which the UE needs to initiate the attach procedure because when the UE moves between two cells, the MME rejects the second TAU initiated by the UE to avoid a problem during handover between the two cells, and consequently, the call process of the UE is totally interrupted, this application provides a communication method. In this method, when a TAU initiated by a terminal device for the first time is not responded, when further determining that a current status is in a call, the terminal device holds a radio resource control (radio resource control, RRC) connection, to be specific, does not perform local release, and does not start a timer T3411. In this way, the terminal device does not need to initiate a TAU procedure again during a continuous call, to avoid a call drop of the terminal device because a TAU procedure initiated by the terminal device again is rejected, and the terminal device needs to initiate an attach request. Therefore, the calling state of the terminal device is maintained.

It may be understood that, communication networks to which the communication method in this application is applicable include, but are not limited to, an LTE network, a 5th generation mobile communication technology (5th Generation Mobile Communication Technology, 5G) network, and the like. The TAU procedure in the LTE network in the communication method in this application also corresponds to a mobility registration update (Mobility Registration Update, MRU) procedure in the 5G network and a procedure in another network, and details are not described herein.

In some embodiments, when the terminal device initiates the TAU for the first time and is not responded to, when determining that a current status is in a call, the terminal device may further detect a transmission and reception status of audio/video data packets, to detect call quality of the terminal device. When the terminal device determines that transmission and reception of the audio/video data packets is normal, the terminal device holds the RRC connection, in other words, does not perform local release, and does not start the timer T3411, so that when in a normal calling state, the terminal device does not need to initiate the TAU procedure again, to avoid a call drop of the terminal device because the TAU procedure initiated by the terminal device again is rejected, and the terminal device needs to initiate an attach request. Therefore, the calling state of the terminal device is maintained.

In some embodiments, when the terminal device initiates the TAU for the first time and is not responded to, when further determining that the current status is in a call, or when further determining that the current status is in a call and transmission and reception of the audio/video data packets is normal, the terminal device may set a penalty level corresponding to a current switching path after the call ends by determining whether the call is normally hung up, to provide a more accurate reference basis for cell switching next time. The switching path is a path through which the terminal device is handed over between the foregoing two cells.

It may be understood that, a link status of a switching path, to be specific, a link status of a switching path through which the terminal device is handed over from a current cell to a new cell (namely, a target cell) may affect a reception status of the TAU request. When the terminal device performs cell switching next time, the terminal device may adjust a determined measured report value of reference signal receiving power (reference signal receiving power, RSRP) of the target cell based on a penalty value corresponding to the penalty level of the current switching path, to adjust a probability of the terminal device being handed over to the target cell. For example, a current switching path with a higher penalty level has a larger penalty value, for example, 20 dB. Therefore, the determined measured report value of the RSRP of the target cell is equal to an actual measured report value of current RSRP of the target cell minus the larger penalty value (20 dB) corresponding to the current switching path. Therefore, the determined measured report value of the RSRP of the target cell is lower. In this way, the terminal device can be prevented from being handed over to the target cell as much as possible, so that the terminal device can be handed over to a cell with a higher measured report value within a range near the target cell. Alternatively, a current switching path with a lower penalty level has a smaller penalty value, for example, 10 dB. Therefore, the determined measured report value of the RSRP of the target cell is equal to an actual measured report value of current RSRP of the target cell minus the smaller penalty value (10 dB) corresponding to the current switching path. Therefore, compared with the current switching path with the higher penalty level, the determined measured report value of the RSRP of the target cell is higher. Therefore, if there is no cell with a higher measured report value of RSRP currently, the terminal device may attempt to be handed over to the target cell, to maintain the calling state of the terminal device as much as possible, thereby improving call experience of the user.

A manner of setting the penalty level corresponding to the current switching path by determining whether the call is normally hung up may include the following:

For example, the call is normally hung up, it indicates that call quality is not affected even if the TAU procedure is not initiated again. In this case, the penalty level of the current switching path is set to be low, in other words, a penalty value corresponding to the penalty level of the current switching path is set to be small, and the terminal device may still be recommended to perform the switching process by using the current path next time. For example, the call is not normally hung up, it indicates that call quality of the current switching path is not good. In this case, the penalty level of the current switching path is set to be high, in other words, a penalty value corresponding to the penalty level of the current switching path is set to be large, to avoid a call drop because the terminal device subsequently performs the switching process by using the current path again.

In some embodiments, when the TAU initiated by the terminal device for the first time is not accepted, when determining that a current state is not in a call, or when determining that a current state is in a call, but transmission and reception of the audio/video data packets is abnormal, the terminal device may further perform local release, reduce a set time of a timer T3411, and initiate the TAU procedure again after the timer T3411 expires, to reduce interval time before the terminal device initiates the TAU procedure again, and enable the terminal device to normally connect to the core network as quickly as possible, thereby maintaining the calling state as much as possible.

In addition, the terminal device may further determine, based on an accept situation of the TAU procedure initiated again, whether to adjust the penalty level of the current path. For example, if the TAU procedure initiated again is accepted, it indicates that a success rate of the current switching path is acceptable, and a current low penalty level may be reduced or maintained; if the TAU procedure initiated again is not accepted, it indicates that a problem exists in the current switching path, and the penalty level of the current switching path may be increased.

In some embodiments, when initiating the first TAU procedure, in the calling state, the terminal device may further set the set value of the timer T3430 to a maximum value, for example, exceeding a statistical average value of call duration, or exceeding statistical normal call duration, so that the TAU procedure does not need to be initiated again during the call, and the TAU procedure is initiated again after the call ends. In this way, the penalty level of the current switching path is set depending on whether the call is normally hung up, to maintain the current calling state, and also reduce a probability of subsequent call drop.

In some embodiments, if the target cell is in an abnormal switching path list, the terminal device may further determine, based on the penalty level of the current switching path, a probability that the TAU request of the current switching path is accepted. If it is determined that the probability that the TAU procedure is rejected is small, the TAU procedure is initiated, and the penalty level of the current switching path is adjusted depending on whether the TAU procedure is responded. Moreover, if it is determined that the probability that the TAU procedure is rejected is large, the TAU procedure is not initiated, and whether transmission and reception of audio/video data packets is normal is monitored. If transmission and reception of the audio/video data packets is normal, the terminal device continues to wait for the call to end, and sets the penalty level of the current switching path by determining whether the call is normally hung up. However, if transmission and reception of the audio/video data packets is abnormal, and the reason is not a poor signal, the TAU procedure is initiated, and the penalty level of the current switching path is set depending on whether the TAU procedure is accepted, to maintain the current calling state, and also reduce a probability of a subsequent call drop. It may be understood that, the abnormal switching path list may be information about an abnormal switching path reported by the terminal device to a cloud after the terminal device records an abnormal switching path with poor communication quality based on an actual situation of cell switching each time, or may be information about an abnormal switching path that is preset in the cloud and that may be delivered to the terminal device.

In some embodiments, when the terminal device is in a non-calling state, the penalty level of the switching path corresponding to the target cell in the abnormal switching path list may be reduced, so that the terminal device is handed over to the target cell and initiates the TAU procedure. Then, the abnormal switching path list and the penalty level of the switching path corresponding to the target cell are adjusted based on the accept situation of the TAU procedure, to update the abnormal switching path list and the penalty level, to provide a basis for a next switching procedure of the terminal device, and also reduce a probability of a subsequent call drop of the terminal device.

It may be understood that, in the foregoing communication method, corresponding to a case in which the target cell is not in the abnormal switching path list, if the first TAU initiated by the terminal device is not accepted, the terminal device may further add the target cell to the abnormal switching path list; however, corresponding to a case in which the target cell is in the abnormal switching path list, if the first TAU initiated by the terminal device is accepted, the terminal device may remove the target cell from the abnormal switching path list, to provide a reference basis for cell switching of the terminal device next time.

Technical solutions of some embodiments of this application are described below with reference to the scenario in FIG. 1, and FIG 5 to FIG. 9. It may be understood that, specific methods and steps in embodiments of this application are all performed by the terminal device 100.

### Embodiment 1

Embodiment 1 of this application discloses a communication method.

The following describes a procedure of the communication method in Embodiment 1 in detail.

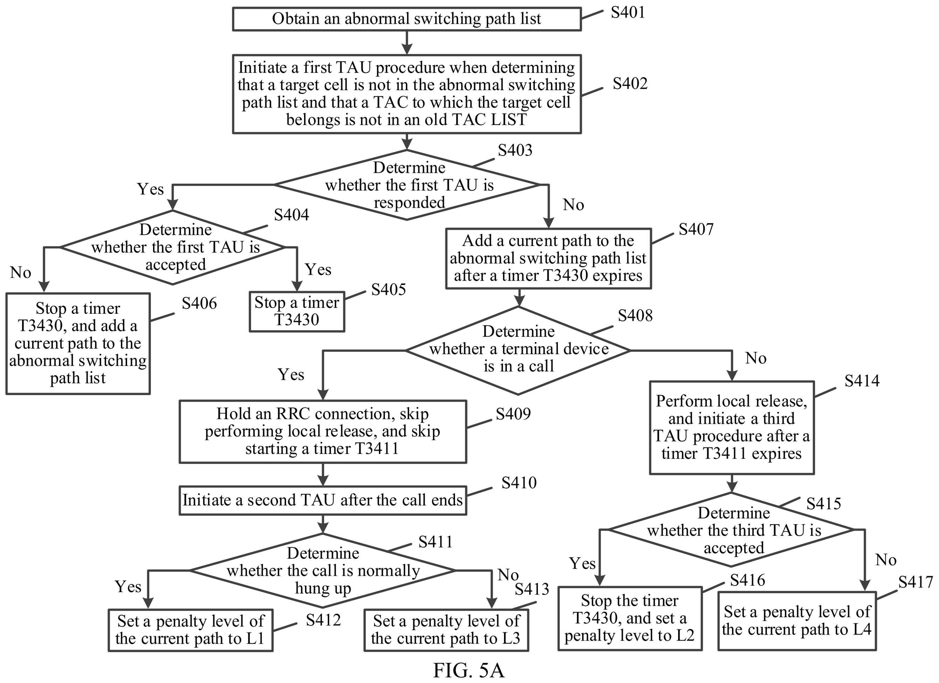

As shown in FIG. 5A, a procedure of the communication method disclosed in a specific embodiment of this application may include the following steps:
S401: Obtain an abnormal switching path list.

It may be understood that, the terminal device may obtain an abnormal switching path of a cell from a big data platform. The big data platform may be configured to collect statistics on abnormal switching paths of terminal devices. When a terminal device undergoes an abnormality in switching between two cells, the terminal device uploads previous abnormality information to a big data platform in the cloud after a network is restored. The big data platform in the cloud analyzes the received information, obtains status of a cell in which switching of the terminal device is abnormal, and notifies another terminal device that needs to perform switching in the abnormal switching path of the abnormal switching path which may cause a call interruption.

It may be understood that, the terminal device may periodically obtain the abnormal switching path list by using the big data platform during start up or after start up. It may be understood that, the abnormal switching path list may be based on data uploaded by one terminal device, or may be based on data uploaded by a plurality of terminal devices. A channel and time in which the terminal device obtains the abnormal switching path list are not specifically limited in this embodiment of this application.

It may be understood that, the abnormal switching path list may include penalty levels of cells in the list, and the terminal device may adjust a measured report value of a cell in the list based on the penalty level of the cell in the list. The method may specifically include: adjusting a measured report value of a cell with a high penalty level in the abnormal switching path list to be lower, to avoid the terminal device being handed over to the cell as much as possible; or adjusting a measured report value of a cell with a low penalty level in the abnormal switching path list to be higher, so that the terminal device may be handed over to the cell, to test whether a signal of a switching path of the cell is normal, and use a test result as a basis for adjusting the abnormal switching path list and the penalty level.

It may be understood that, a measured report value of a cell may be a measured report value of reference signal receiving power (reference signal receiving power, RSRP) of the cell. The RSRP measured report value provides a signal strength measurement of the cell. A higher RSRP measured report value indicates a stronger signal of the cell. LTE candidate cells may be sorted according to RSRP measured report values, to be used as a standard for handover and cell reselection. A cell with a higher RSRP measured report value is more likely to be used as a target cell for handover. For example, the abnormal switching path list may include switching paths of several groups of cells, for example, a path from a PCI 93 cell to a PCI 124 cell, a path from the PCI 93 cell to a PCI 135 cell, a path from the PCI 93 cell to a PCI 146 cell, and a path from the PCI 93 cell to a PCI 157 cell. In addition, it may be marked in the penalty level that a penalty level of the path from the PCI 93 cell to the PCI 124 cell is a level L4, a penalty level of the path from the PCI 93 cell to the PCI 135 cell is a level L3, a penalty level of the path from the PCI 93 cell to the PCI 146 cell is a level L2, and a penalty level of the path from the PCI 93 cell to the PCI 157 cell is a level L1.

A penalty value of the level L1 < a penalty value of the level L2 < a penalty value of the level L3 < a penalty value of the level L4. For example, the penalty value of the level L1 may be 5 dB, the penalty value of the level L2 may be 10 dB, the penalty value of the level L3 may be 15 dB, and the penalty value of the level L4 may be 20 dB. Therefore, if the terminal device needs to be handed over from the PCI 93 cell to another cell, a determined measured report value of RSRP of the PCI 124 cell at the level L4 is equal to a current real measured report value of the RSRP of the PCI 124 cell minus the penalty value (20 dB) of the L4 level. Therefore, switching to the PCI 124 cell can be avoided as much as possible.

It may be understood that, a grading system of the penalty levels and the penalty values corresponding to the penalty levels may be set based on an actual scenario, and are not specifically limited in this embodiment of this application.

S402: Initiate a first TAU procedure when determining that the target cell is not in the abnormal switching path list and that the TAC to which the target cell belongs is not in an old TAC LIST.

It may be understood that, when it is determined that the target cell is not in the abnormal switching path list, and the target cell is a cell to which the terminal device is handed over, if a TAC of the target cell belongs to a new TAC LIST, it indicates that the terminal device is no longer within coverage of a network on which the terminal device is previously registered, and the terminal device needs to initiate the first TAU procedure to an MME.

It may be understood that, when it is determined that the target cell is in the abnormal switching path list, and the target cell is a cell to which the terminal device is handed over, the terminal device may further determine, based on the penalty level of the current switching path, a probability that a TAU request of the current switching path is accepted. If it is determined that the probability that the TAU procedure is rejected is small, the first TAU procedure is initiated, and the penalty level of the current switching path is adjusted depending on whether the TAU procedure is responded. Moreover, if it is determined that the probability that the TAU procedure is rejected is large, the TAU procedure is not initiated, and whether transmission and reception of audio/video data packets is normal is monitored. If transmission and reception of the audio/video data packets is normal, the terminal device continues to wait for the call to end, and sets the penalty level by determining whether the call is normally hung up. However, if transmission and reception of the audio/video data packets is abnormal, and the reason is not a poor signal, the TAU procedure is initiated, and the penalty level is set depending on whether the TAU procedure is accepted, to maintain the current calling state, and also reduce a probability of a subsequent call drop. (For details, refer to descriptions of steps in Embodiment 7).

The method is described below by using an example in which it is determined that the target cell is not in the abnormal switching path list.

S403: Determine whether the first TAU is responded. If the first TAU is responded, perform step S404: Determine whether the first TAU is accepted. If the first TAU is not responded, perform step S407: Add the current path to the abnormal switching path list after a timer T3430 expires.

It may be understood that, whether the TAU procedure is responded by the MME may be determined within duration of the timer T3430. After the terminal device initiates the first TAU request, the MME may respond or not respond. The responding may be that the MME accepts the first TAU request, or may be that the MME rejects the first TAU request.

S404: Determine whether the first TAU is accepted. If the first TAU is accepted, perform step S405: Stop the timer T3430. If the first TAU is not accepted, perform step S406: Stop the timer T3430, and add the current path to the abnormal switching path list.

S405: Stop the timer T3430.

It may be understood that, if the first TAU is accepted, the timer T3430 may be stopped.

S406: Stop the timer T3430, and add the current path to the abnormal switching path list.

It may be understood that, if the first TAU is rejected, it indicates that a problem exists in a path between two cells, and the terminal device needs to store the current switching path into the abnormal switching path list. In addition, in subsequent steps, an abnormality degree of the current path is further determined.

S407: Add the current path to the abnormal switching path list after the timer T3430 expires.

It may be understood that, if the MME does not respond to the first TAU request, it indicates that a problem exists in a path between two cells, and the terminal device needs to store the current switching path into the abnormal switching path list. In addition, in subsequent steps, an abnormality degree of the current path is further determined.

S408: Determine whether the terminal device is in a call.

If the terminal device is in a call, perform step S409: Hold an RRC connection, skip performing local release, and skip starting a timer T3411. If the terminal device is not in a call, perform step S414: Perform local release, and initiate a third TAU procedure after a timer T3411 expires.

It may be understood that, after storing the current switching path into the abnormal switching path list, the terminal device needs to further determine whether a current status is in a call.

S409: Hold the RRC connection, skip performing local release, and skip starting the timer T3411.

It may be understood that, when the terminal device determines that the terminal device is in a calling state currently, the terminal device may remain in the current state until the call ends, so as not to interrupt the call because the TAU procedure is not accepted by the MME.

S410: Initiate a second TAU procedure after the call ends.

It may be understood that, the terminal device initiates the second TAU procedure after the call ends. This can avoid a case in which the previous calling state is interrupted, causing a call drop, and the terminal device can attempt to establish connection with the MME again, to update location information of the terminal device.

S411: Determine whether the call is normally hung up. If the call is normally hung up, perform step S412: Set a penalty level of the current path to L1. If the call is not normally hung up, perform step S413: Set a penalty level of the current path to L3.

It may be understood that, after the call of the terminal device ends, whether the previous call is normally hung up is further determined, to set the penalty level of the current switching path accordingly.

It may be understood that, a sequence between the step S410 and the step S411 is not limited.

S412: Set the penalty level of the current switching path to L1.

It may be understood that, if the previous call is normally hung up, it indicates that although the first TAU procedure is not responded by the MME, the call between the two cells is not affected. Therefore, the penalty level of the current path may be set to be low, for example, L1 or L2. In this case, next time, there is a high probability of attempting a switching procedure on the current path.

S413: Set the penalty level of the current path to L3.

It may be understood that, if the previous call is not normally hung up, it indicates that the current path has a serious communication abnormality problem, and the penalty level of the current path may be set to be high, for example, L3 or L4.

It may be understood that, a reason why the previous call is not normally hung up may include a call drop caused by expiration of RTP packet transmission. In this case, after the RTP packet transmission expires for 20s, the call is interrupted. The reason why the previous call is not normally hung up may further include an error 503 of network hanging up. In this case, the call is immediately interrupted. The reason why the previous call is not normally hung up is not specifically limited in this embodiment of this application.

S414: Perform local release, and initiate the third TAU procedure after the timer T3411 expires.

It may be understood that, if the terminal device determines that the current status is not in a call, the terminal device may perform local release and starts the timer T3411, and initiate the TAU procedure again after the timer T3411 expires, to quickly establish connection with the network.

It may be understood that, a set value of the timer T3411 may be 10s in the protocol, or the set value of the timer T3411 may be reduced, for example, to 1s, to establish the connection with the network more rapidly.

S415: Determine whether the third TAU procedure is accepted. If the third TAU procedure is accepted, perform step S416: Stop the timer T3430, and set the penalty level of the current path to L2. If the third TAU procedure is not accepted, perform step S417: Set the penalty level of the current path to L4.

It may be understood that, a communication status of the current path may alternatively be determined by determining whether the third TAU procedure is accepted by the MME, to set the penalty level of the current path.

S416: Stop the timer T3430, and set the penalty level of the current path to L2.

It may be understood that, if the third TAU procedure is accepted by the MME, it indicates that a communication status of the path between the two cells is acceptable, and the penalty level may be set to be low, for example, L2 or L1. In this case, next time, a switching procedure on the current path may still be attempted.

S417: Set the penalty level of the current path to L4.

It may be understood that, if the third TAU procedure is not accepted by the MME, it indicates that the communication status of the path between the two cells is very poor. Therefore, the penalty level of the current path is adjusted to be set to be high, for example, L4 or L3. In this case, next time, a switching procedure on the current path should be avoided as much as possible.

In the foregoing communication method, when the TAU initiated by the terminal device for the first time is not responded or rejected, the terminal device sets the current switching path into the abnormal switching path list, and may record an abnormal status of the current switching path, for reference by the terminal device to perform cell switching next time. In addition, when the terminal device further determines that the current status is in a call, the terminal device holds the RRC connection and does not start the timer T3411, so that when the call is normal, the terminal device does not need to initiate the TAU procedure again, and the calling state is maintained. Moreover, the terminal device may attempt to connect to the network again by initiating the second TAU after the call ends, and the terminal device sets the penalty level of the current path by determining whether the call is normally hung up, so that a more accurate reference basis can be provided for cell switching next time. In addition, when the terminal device further determines that the current status is not in a call, the terminal device reduces the set time of the timer T3411, and initiates the TAU again after the timer T3411 expires, to reduce time in which the terminal device establishes the connection with the network again.

### Embodiment 2

Embodiment 2 of this application discloses a communication method. This method differs from Embodiment 1 in that: When the first TAU request is not accepted, after the terminal device further determines that the current status is in a call, the terminal device further detects a transmission and reception status of audio/video data packets. When transmission and reception of the audio/video data packets is normal, the terminal device holds the RRC connection and does not start the timer T3411, so that the terminal device does not need to initiate the TAU procedure again during the call, and the calling state is maintained. The terminal device initiates the second TAU procedure after the call ends, and sets the penalty level of the current path by determining whether the call is normally hung up. However, if the terminal device further determines that the current status is in a call, but transmission and reception of the audio/video data packets is abnormal, the terminal device performs local release, reduces the set value of the timer T3411, and sets the penalty level of the current path to be low, so that the terminal device can attempt to establish the connection with the network again in shorter time. The terminal device initiates the third TAU after the timer T3411 expires, and determines, based on an accept situation of the third TAU, whether to adjust the penalty level of the current path. Then, if the terminal device further determines that the current status is not in a call, the terminal device initiates a fourth TAU after the timer T3411 expires, and then sets the penalty level of the current path based on an accept situation of the fourth TAU.

The following describes a procedure of the communication method in Embodiment 2 in detail.

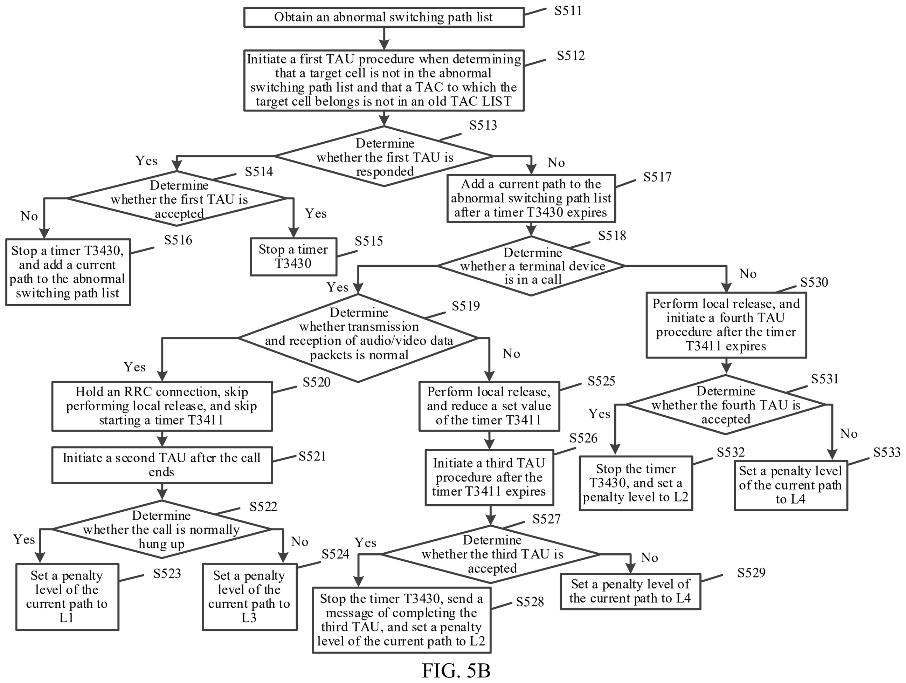

As shown in FIG. 5B, a procedure of the communication method disclosed in a specific embodiment of this application may include the following steps:
S511: Obtain an abnormal switching path list.
S512: Initiate a first TAU procedure when determining that a target cell is not in the abnormal switching path list and that a TAC to which the target cell belongs is not in an old TAC LIST.
S513: Determine whether the first TAU is responded. If the first TAU is responded, perform step S514: Determine whether the first TAU is accepted. If the first TAU is not responded, perform step S517: Add a current path to the abnormal switching path list after a timer T3430 expires.
S514: Determine whether the first TAU is accepted. If the first TAU is accepted, perform step S515: Stop the timer T3430. If the first TAU is not accepted, perform step S516: Stop the timer T3430, and add the current path to the abnormal switching path list.
S515: Stop the timer T3430.
S516: Stop the timer T3430, and add the current path to the abnormal switching path list.
S517: Add the current path to the abnormal switching path list after the timer T3430 expires.
S518: Determine whether the terminal device is in a call. If the terminal device is in a call, perform step S519: Determine whether transmission and reception of audio/video data packets is normal. If the terminal device is not in a call, perform step S530: Perform local release, and initiate a fourth TAU procedure after a timer T3411 expires.
   It may be understood that step S511 to step S518 are correspondingly the same as step S401 to step S408, and details are not described herein again.
S519: Determine whether transmission and reception of the audio/video data packets is normal. If transmission and reception of the audio/video data packets is normal, perform step S520: Hold an RRC connection, skip performing local release, and skip starting a timer T3411. If transmission and reception of the audio/video data packets is abnormal, perform step S525: Perform local release, and reduce a set value of a timer T3411.
   It may be understood that, the terminal device further determines whether transmission and reception of the audio/video data packets such as real-time transport (real-time transport, RTP) packets is normal.
S520: Hold the RRC connection, skip performing local release, and skip starting the timer T3411. (It may be understood that, when the terminal device determines that transmission and reception of the audio/video data packets is normal, the terminal device may remain in the current state until the call ends, so as not to interrupt the call because the TAU procedure is not accepted by an MME.
S521: Initiate a second TAU procedure after the call ends.
   It may be understood that, the terminal device initiates the second TAU procedure after the call ends. This can avoid a case in which the previous calling state is interrupted, causing a call drop, and the terminal device can attempt to establish connection with the MME again, to update location information of the terminal device.
S522: Determine whether the call is normally hung up. If the call is normally hung up, perform step S523: Set a penalty level of the current path to L1. If the call is not normally hung up, perform step S524: Set a penalty level of the current path to L3.
   It may be understood that, after the call of the terminal device ends, whether the previous call is normally hung up is further determined, to set the penalty level of the current switching path accordingly.
S523: Set the penalty level of the current path to L1.
   It may be understood that, if the previous call is normally hung up, it indicates that although the first TAU procedure is not accepted by the MME, the call between the two cells is not affected. Therefore, the penalty level of the current path may be set to be low, for example, L1 or L2. In this case, next time, there is a high probability of attempting a switching procedure on the current path.
S524: Set the penalty level of the current path to L3.

It may be understood that, if the previous call is not normally hung up, it indicates that the current path has a serious communication abnormality problem, and the penalty level of the current path may be set to be high, for example, L3 or L4.

It may be understood that, a reason why the previous call is not normally hung up may include a call drop caused by expiration of RTP packet transmission. In this case, after the RTP packet transmission expires for 20s, the call is interrupted. The reason why the previous call is not normally hung up may further include an error 503 of network hanging up. In this case, the call is immediately interrupted. The reason why the previous call is not normally hung up is not specifically limited in this embodiment of this application.

S525: Perform local release, and reduce the set value of the timer T3411.

It may be understood that, if transmission and reception of the audio/video data packets is abnormal, it indicates that the current call is in an abnormal state, and when the local release is performed, the terminal device is in a state in which the terminal device neither receives a signal nor transmits a signal, that is, a silent state. Then, the set value of the timer T3411 may be reduced, to reduce time in which the terminal device initiates the TAU procedure again, to attempt to establish connection with the network again, that is, to reduce time in the abnormal state of the call. For example, the set value of the timer T3411 may be reduced from 10s in the protocol to 1s, and a specific set value is adjusted according to a requirement. The set value of the timer T3411 is not specifically limited in this embodiment of this application.

S526: Initiate a third TAU procedure after the timer T3411 expires.

It may be understood that, according to the protocol, after the timer T3411 expires, the terminal device initiates the TAU procedure again, to attempt to establish the connection with the network.

S527: Determine whether the third TAU procedure is accepted. If the third TAU procedure is accepted, perform step S528: Stop the timer T3430, send a message of completing the third TAU, and set the penalty level of the current path to L2. If the third TAU procedure is not accepted, perform step S529: Set the penalty level of the current path to L4.

It may be understood that, the penalty level of the current path may be set to be low, for example, L1 or L2. Because when the terminal device is in a call, although transmission and reception of the audio/video data packets is abnormal, there is still a probability that the terminal device continues the call. Therefore, next time, a switching procedure on the current path may be attempted with a high probability.

It may be understood that, a communication status of the current path may be determined by determining whether the third TAU procedure is accepted by the MME, to set the penalty level of the current path.

S528: Stop the timer T3430, send the message of completing the third TAU, and set the penalty level to L2.

It may be understood that, if the third TAU procedure is accepted by the MME, it indicates that a communication status of the path between the two cells is acceptable. In this case, next time, a switching procedure on the current path may still be attempted.

S529: Set the penalty level of the current path to L4.

It may be understood that, if the third TAU procedure is not accepted by the MME, it indicates that the communication status of the path between the two cells is very poor. Therefore, the penalty level of the current path is adjusted to be set to be higher, for example, L4 or L3. In this case, next time, a switching procedure on the current path should be avoided as much as possible.

S530: Perform local release, and initiate the fourth TAU procedure after the timer T3411 expires.

It may be understood that, if the terminal device determines that the current status is not in a call, the terminal device may perform local release and starts the timer T3411, and initiate the TAU procedure again after the timer T3411 expires, to quickly establish connection with the network.

It may be understood that, a set value of the timer T3411 may be 10s in the protocol, or the set value of the timer T3411 may be reduced, for example, to 1s, to establish the connection with the network more rapidly.

S531: Determine whether the fourth TAU procedure is accepted. If the fourth TAU procedure is accepted, perform step S532: Stop the timer T3430, and set the penalty level to L2. If the fourth TAU procedure is not accepted, perform step S533: Set the penalty level of the current path to L4.

It may be understood that, a communication status of the current path may alternatively be determined by determining whether the fourth TAU procedure is accepted by the MME, to set the penalty level of the current path.

S532: Stop the timer T3430, and set the penalty level of the current path to L2.

It may be understood that, if the fourth TAU procedure is accepted by the MME, it indicates that a communication status of the path between the two cells is acceptable, and the penalty level may be set to be low, for example, L2 or L1. In this case, next time, a switching procedure on the current path may still be attempted.

S533: Set the penalty level of the current path to L4.

It may be understood that, if the fourth TAU procedure is not accepted by the MME, it indicates that the communication status of the path between the two cells is very poor. Therefore, the penalty level of the current path is adjusted to be set to be high, for example, L4 or L3. In this case, next time, a switching procedure on the current path should be avoided as much as possible.

In the foregoing communication method, in a plurality of abnormal cases, the terminal device sets the current switching path into the abnormal switching path list, sets the penalty level of the current path, and may record an abnormal status of the current switching path, for reference by the terminal device to perform cell switching next time. In addition, when the terminal device further determines that the current status is in a call and transmission and reception of the audio/video data packets is normal, the terminal device holds the RRC connection and does not start the timer T3411, so that when the call is normal, the terminal device does not need to initiate the TAU procedure again, and the calling state is maintained. In addition, when the terminal device further determines that the current status is in a call but transmission and reception of the audio/video data packets is abnormal, the terminal device reduces the set time of the timer T3411, and initiates the TAU again after the timer T3411 expires, to reduce time in which the terminal device establishes the connection with the network again, and attempt to maintain the calling state as much as possible. In addition, when the terminal device further determines that the current status is not in a call, the terminal device reduces the set time of the timer T3411, and initiates the TAU again after the timer T3411 expires, to reduce time in which the terminal device establishes the connection with the network again.

### Embodiment 3

Embodiment 3 of this application discloses a communication method. This method differs from the Embodiment 1 in that: In this method, in a case in which the target cell is not in the abnormal switching path list, when the first TAU request initiated by the terminal device is not responded, the terminal device sets the current switching path into the abnormal switching path list.

The following describes a procedure of the communication method in Embodiment 3 in detail.

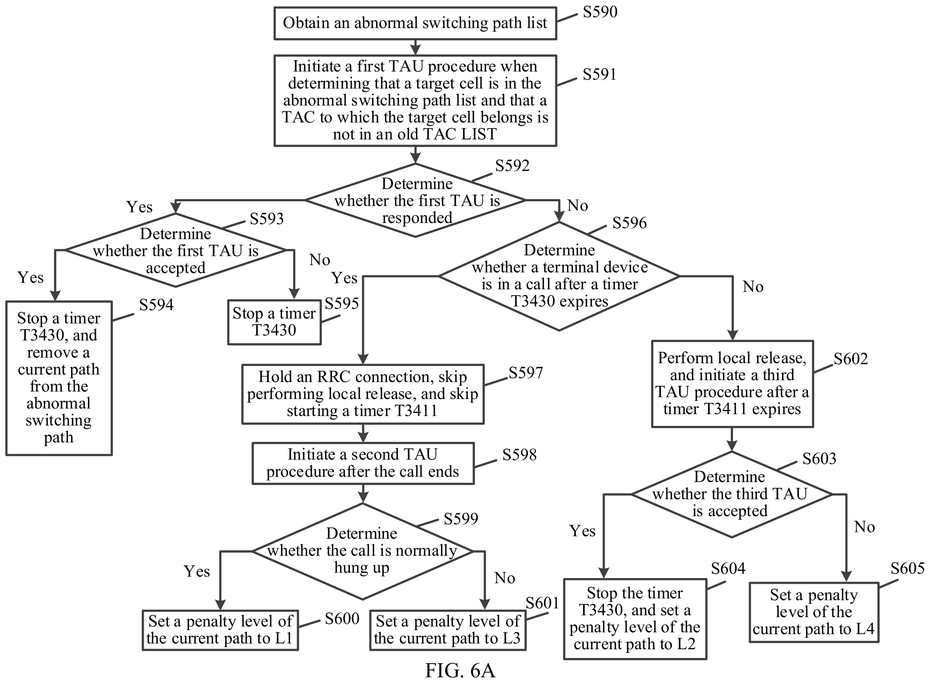

As shown in FIG. 6A, a procedure of the communication method disclosed in a specific embodiment of this application may include the following steps:
S590: Obtain an abnormal switching path list.

It may be understood that, similar to step S401, a channel and time in which the terminal device obtains the abnormal switching path list and the penalty level are not specifically limited in this embodiment of this application.

It may be understood that, a grading system of the penalty levels and a measured report value of RSRP that is adjusted after the target cell is determined may be set based on an actual scenario as described above, and are not specifically limited in this embodiment of this application.

S591: Initiate a first TAU procedure when determining that a target cell is in the abnormal switching path list and that a TAC to which the target cell belongs is not in an old TAC LIST.

It may be understood that, the target cell is a cell to which the terminal device is handed over, and if a TAC of the target cell belongs to a new TAC LIST, it indicates that the terminal device is no longer within coverage of a network on which the terminal device is previously registered, and the terminal device needs to initiate the first TAU procedure to an MME.

S592: Determine whether the first TAU is responded. If the first TAU is responded, perform step S593: Determine whether the first TAU is accepted. If the first TAU is not responded, perform step S596: Determine whether the terminal device is in a call after a timer T3430 expires.

It may be understood that, whether the TAU procedure is accepted by the MME may be determined within duration of the timer T3430. After the terminal device initiates the first TAU request, the MME may respond or not respond.

S593: Determine whether the first TAU is accepted. If the first TAU is accepted, perform step S594: Stop the timer T3430, and remove a current path from the abnormal switching path list. If the first TAU is not accepted, perform step S595: Stop the timer T3430.

S594: Stop the timer T3430, and remove a current path from the abnormal switching path list.

It may be understood that, if the first TAU is accepted, it indicates that communication quality of the current path is good, and the current path may be removed from the abnormal switching path list, to update the abnormal switching path list.

S595: Stop the timer T3430.

S596: Determine whether the terminal device is in a call after the timer T3430 expires. If the terminal device is in a call, perform step S597: Hold an RRC connection, skip performing local release, and skip starting a timer T3411. If the terminal device is not in a call, perform step S602: Perform local release, and initiate a third TAU procedure after a timer T3411 expires.

It may be understood that, the terminal device further determines whether a current status is in a call.

S597: Hold the RRC connection, skip performing local release, and skip starting the timer T3411.

It may be understood that, when the terminal device determines that the terminal device is in a calling state currently, the terminal device may remain in the current state until the call ends, so as not to interrupt the call because the TAU procedure is not accepted by the MME.

S598: Initiate a second TAU procedure after the call ends.

It may be understood that, the terminal device initiates the second TAU procedure after the call ends. This can avoid a case in which the previous calling state is interrupted, causing a call drop, and the terminal device can attempt to establish connection with the MME again, to update location information of the terminal device.

S599: Determine whether the call is normally hung up. If the call is normally hung up, perform step S600: Set a penalty level of the current path to L1. If the call is not normally hung up, perform step S601: Set a penalty level of the current path to L3.

It may be understood that, after the call of the terminal device ends, whether the previous call is normally hung up is further determined, to adjust the penalty level of the current switching path accordingly.

S600: Set the penalty level of the current path to L1.

It may be understood that, if the previous call is normally hung up, it indicates that although the first TAU procedure is not accepted by the MME, the call between the two cells is not affected. Therefore, the penalty level of the current path may be set to be low, for example, L1 or L2. In this case, next time, there is a high probability of attempting a switching procedure on the current path.

S601: Set the penalty level of the current path to L3.

It may be understood that, if the previous call is not normally hung up, it indicates that the current path has a serious communication abnormality problem, and the penalty level of the current path may be set to be high, for example, L3 or L4.

It may be understood that, a reason why the previous call is not normally hung up may include a call drop caused by expiration of RTP packet transmission. In this case, after the RTP packet transmission expires for 20s, the call is interrupted. The reason why the previous call is not normally hung up may further include a reason 503 of network hanging up. In this case, the call is immediately interrupted. The reason why the previous call is not normally hung up is not specifically limited in this embodiment of this application.

S602: Perform local release, and initiate the third TAU procedure after the timer T3411 expires.

It may be understood that, if the terminal device determines that the current status is not in a call, the terminal device may perform local release and starts the timer T3411, and initiate the TAU procedure again after the timer T3411 expires, to quickly establish connection with the network.

It may be understood that, a set value of the timer T3411 may be 10s in the protocol, or the set value of the timer T3411 may be reduced, for example, to 1s, to establish the connection with the network more rapidly.

S603: Determine whether the third TAU procedure is accepted. If the third TAU procedure is accepted, perform step S604: Stop the timer T3430, and set the penalty level of the current path to L2. If the third TAU procedure is not accepted, perform step S605: Set the penalty level of the current path to L4.

It may be understood that, a communication status of the current path may alternatively be determined by determining whether a fourth TAU procedure is accepted by the MME, to set the penalty level of the current path.

S604: Stop the timer T3430, and set the penalty level of the current path to L2.

It may be understood that, if the fourth TAU procedure is accepted by the MME, it indicates that a communication status of the path between the two cells is acceptable, and the penalty level may be set to be low, for example, L2 or L1. In this case, next time, a switching procedure on the current path may still be attempted.

S605: Set the penalty level of the current path to L4.

It may be understood that, if the fourth TAU procedure is not accepted by the MME, it indicates that the communication status of the path between the two cells is very poor. Therefore, the penalty level of the current path is adjusted to be set to be high, for example, L4 or L3. In this case, next time, a switching procedure on the current path should be avoided as much as possible.

In the foregoing communication method, when the TAU initiated by the terminal device for the first time is accepted, the terminal device removes the current switching path from the abnormal switching path list, and may record an abnormal status of the current switching path, for reference by the terminal device to perform cell switching next time. In addition, when the TAU initiated by the terminal device for the first time is not accepted, and when the terminal device further determines that the current status is in a call, the terminal device holds the RRC connection and does not start the timer T3411, so that when the call is normal, the terminal device does not need to initiate the TAU procedure again, and the calling state is maintained. Moreover, the terminal device may attempt to connect to the network again by initiating the second TAU after the call ends, and the terminal device sets the penalty level of the current path by determining whether the call is normally hung up, so that a more accurate reference basis can be provided for cell switching next time. In addition, when the terminal device further determines that the current status is not in a call, the terminal device reduces the set time of the timer T3411, and initiates the TAU again after the timer T3411 expires, to reduce time in which the terminal device establishes the connection with the network again.

### Embodiment 4

Embodiment 4 of this application discloses another communication method. A difference between the method and the third existing technology lies in that: When the first TAU request is not accepted, in a case in which the terminal device further determines that the current status is in a call and transmission and reception of the audio/video data packets is normal, the terminal device holds the RRC connection and does not start the timer T3411, so that the terminal device does not need to initiate the TAU procedure again during the call, and the calling state is maintained. The terminal device initiates the second TAU procedure after the call ends, and sets the penalty level of the current path by determining whether the call is normally hung up. However, if the terminal device further determines that the current status is in a call, but transmission and reception of the audio/video data packets is abnormal, the terminal device performs local release, reduces the set value of the timer T3411, and sets the penalty level of the current path to be low, so that the terminal device can attempt to establish the connection with the network again in shorter time. The terminal device initiates the third TAU after the timer T3411 expires, and determines, based on an accept situation of the third TAU, whether to adjust the penalty level of the current path. Then, if the terminal device further determines that the current status is not in a call, the terminal device initiates a fourth TAU after the timer T3411 expires, and then sets the penalty level of the current path based on an accept situation of the fourth TAU.

The following describes a procedure of the communication method in Embodiment 4 in detail.

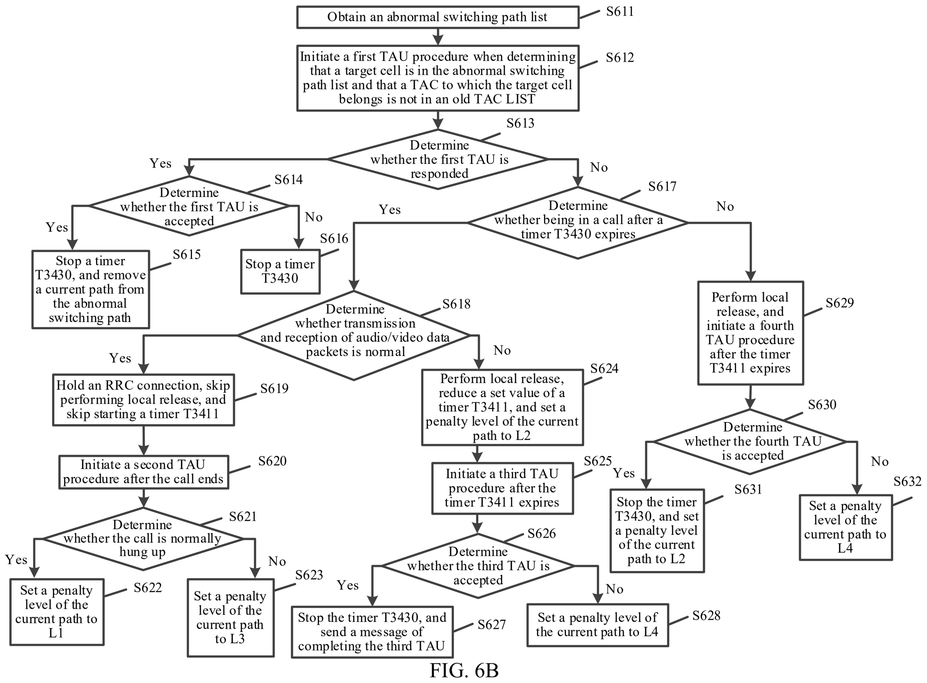

As shown in FIG. 6B, a procedure of the communication method disclosed in a specific embodiment of this application may include the following steps:
S611: Obtain an abnormal switching path list.
S612: Initiate a first TAU procedure when determining that a target cell is in the abnormal switching path list and that a TAC to which the target cell belongs is not in an old TAC LIST.
S613: Determine whether a first TAU is responded. If the first TAU is responded, perform step S614: Determine whether the first TAU is accepted. If the first TAU is not responded, perform step S617: Determine whether the terminal device is in a call after a timer T3430 expires.
S614: Determine whether the first TAU is accepted. If the first TAU is accepted, perform step S615: Stop the timer T3430, and remove a current path from the abnormal switching path list. If the first TAU is not accepted, perform step S616: Stop the timer T3430.
S615: Stop the timer T3430, and remove the current path from the abnormal switching path list.
S616: Stop the timer T3430.
S617: Determine whether the terminal device is in a call after the timer T3430 expires. If the terminal device is in a call, perform step S618: Determine whether transmission and reception of audio/video data packets is normal. If the terminal device is not in a call, perform step S629: Perform local release, and initiate a fourth TAU procedure after a timer T3411 expires.
   It may be understood that step S611 to step S617 are correspondingly the same as step S611 and step S590 to step S596, and details are not described herein again.
S618: Determine whether transmission and reception of the audio/video data packets is normal. If transmission and reception of the audio/video data packets is normal, perform step S619: Hold an RRC connection, skip performing local release, and skip starting a timer T3411. If transmission and reception of the audio/video data packets is abnormal, perform step S624: Perform local release, reduce a set value of a timer T3411, and set a penalty level of the current path to L2.
S619: Hold the RRC connection, skip performing local release, and skip starting the timer T3411.
   It may be understood that, when the terminal device determines that transmission and reception of the audio/video data packets is normal, the terminal device may remain in the current state until the call ends, so as not to interrupt the call because the TAU procedure is not accepted by an MME.
S620: Initiate a second TAU procedure after the call ends.
   It may be understood that, the terminal device initiates the second TAU procedure after the call ends. This can also avoid a case in which the previous calling state is interrupted, causing a call drop, and the terminal device can attempt to establish connection with the MME again, to update location information of the terminal device.
S621: Determine whether the call is normally hung up. If the call is normally hung up, perform step S620: Set a penalty level of the current path to L1. If the call is not normally hung up, perform step S623: Set a penalty level of the current path to L3.
   It may be understood that, after the call of the terminal device ends, the terminal device may further set the penalty level of the current switching path by determining whether the previous call is normally hung up.
S622: Set the penalty level of the current path to L1.
   It may be understood that, if the previous call is normally hung up, the penalty level of the current path may be set to be low, for example, L1 or L2. In this case, next time, there is a high probability of attempting a switching procedure on the current path.
S623: Set the penalty level of the current path to L3.

It may be understood that, if the previous call is not normally hung up, the penalty level of the current path may be set to be high, for example, L3 or L4.

It may be understood that, a reason why the previous call is not normally hung up is not specifically limited in this embodiment of this application.

S624: Perform local release, reduce the set value of the timer T3411, and set the penalty level of the current path to L2.

It may be understood that, if transmission and reception of the audio/video data packets is abnormal, it indicates that the current call is in an abnormal state. Then, similarly, the set value of the timer T3411 may be reduced, to reduce time in which the terminal device initiates the TAU procedure again, to attempt to reduce time in the abnormal state of the call. Similarly, the set value of the timer T3411 may alternatively be reduced from 10s in the protocol to 1s. The set value of the timer T3411 is not specifically limited in this embodiment of this application. It may be understood that, the penalty level of the current path may be set to be low, for example, L1 or L2. Therefore, next time, a switching procedure on the current path may be attempted with a high probability.

S625: Initiate a third TAU procedure after the timer T3411 expires.

It may be understood that, after the timer T3411 expires, the terminal device initiates the TAU procedure again.

S626: Determine whether the third TAU procedure is accepted. If the third TAU procedure is accepted, perform step S627: Stop the timer T3430, and send a message of completing the third TAU. If the third TAU procedure is not accepted, perform step S628: Set the penalty level of the current path to L4.

It may be understood that, the penalty level of the current path may be set by determining whether the third TAU procedure is accepted by the MME.

S627: Stop the timer T3430, and send the message of completing the third TAU.

It may be understood that, if the third TAU procedure is accepted by the MME, it indicates that a communication status of the path between the two cells is acceptable. In this case, the penalty level of the current path may be maintained.

S628: Set the penalty level of the current path to L4.

It may be understood that, if the third TAU procedure is not accepted by the MME, the penalty level of the current path is adjusted to be higher, for example, L4 or L3. In this case, next time, a switching procedure on the current path should be avoided as much as possible.

S629: Perform local release, and initiate the fourth TAU procedure after the timer T3411 expires.

It may be understood that, if the current status is not in a call, the terminal device may perform local release and starts the timer T3411, and initiate the TAU procedure again after the timer T3411 expires, to quickly establish connection with the network. In addition, a set value of the timer T3411 may alternatively be 10s in the protocol, or the set value of the timer T3411 may be reduced, for example, to 1s, to establish the connection with the network more rapidly.

S630: Determine whether the fourth TAU procedure is accepted. If the fourth TAU procedure is accepted, perform step S631: Stop the timer T3430, and set the penalty level of the current path to L2. If the fourth TAU procedure is not accepted, perform step S632: Set the penalty level of the current path to L4.

It may be understood that, the penalty level of the current path may be set by determining whether the fourth TAU procedure is accepted by the MME.

S631: Stop the timer T3430, and set the penalty level to L2.

It may be understood that, if the fourth TAU procedure is accepted by the MME, the penalty level may be set to be low, for example, L2 or L1.

S632: Set the penalty level of the current path to L4.

It may be understood that, if the fourth TAU procedure is not accepted by the MME, the penalty level of the current path is adjusted to be high, for example, L4 or L3.

In the foregoing communication method, when the first TAU request initiated by the terminal device is accepted, the current switching path is removed from the abnormal switching path list, and the abnormal switching path list is updated, to provide more accurate information for next handover of the terminal device. In addition, in a plurality of abnormal cases, the terminal device resets the penalty level of the current switching path, to record a latest abnormal case of the current switching path, thereby providing more accurate information for next handover, and reducing a call drop rate of subsequent calls. In addition, when the terminal device further determines that the current status is in a call and transmission and reception of the audio/video data packets is normal, the terminal device holds the RRC connection and does not start the timer T3411, so that the calling state of the terminal device is maintained. In addition, when the terminal device further determines that the current status is in a call but transmission and reception of the audio/video data packets is abnormal, the terminal device reduces the set time of the timer T3411, to reduce time in which the terminal device establishes the connection with the network again, and attempt to maintain the calling state as much as possible. In addition, when the terminal device further determines that the current status is not in a call, the terminal device reduces the set time of the timer T3411. This can also reduce time in which the terminal device establishes the connection with the network again.

### Embodiment 5

Embodiment 5 of this application discloses another communication method. In this method, in a case in which the target cell is not in the abnormal switching path list, when the first TAU request initiated by the terminal device is not accepted, the terminal device adds the current switching path to the abnormal switching path list. Then, the terminal device sets a set value of a timer T3430 to a maximum value, in other words, exceeding normal call duration, and initiates a TAU procedure again after the call ends, to set a penalty level of the current path depending on whether the call is normally hung up.

The following describes a procedure of the communication method in Embodiment 5 in detail.

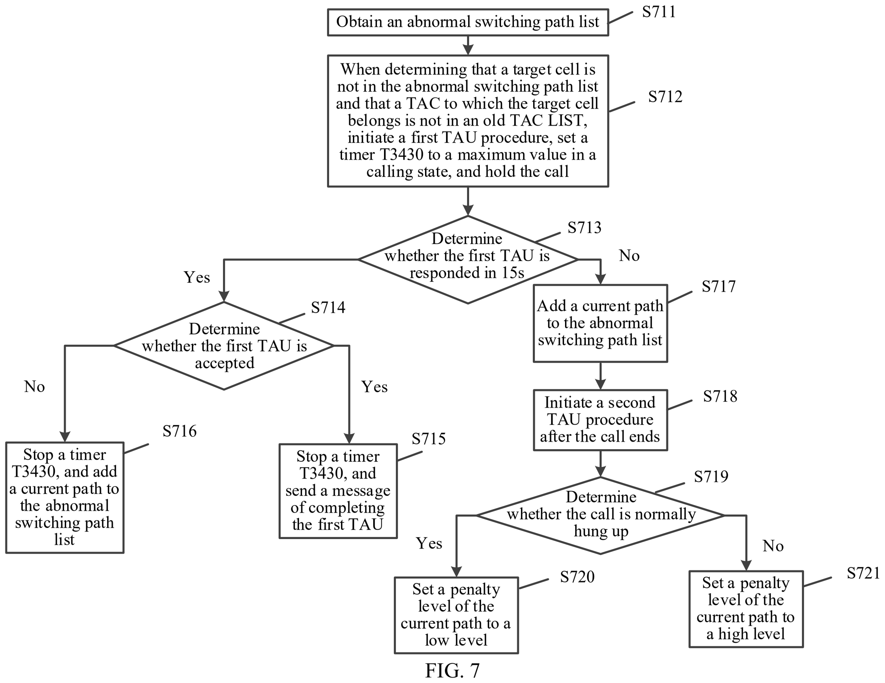

As shown in FIG. 7, a procedure of the communication method disclosed in a specific embodiment of this application may include the following steps:
S711: Obtain an abnormal switching path list.
   It may be understood that, similar to step S401, a grading system of the penalty levels may be set based on an actual scenario, and is not specifically limited in this embodiment of this application.
S712: When determining that the target cell is not in the abnormal switching path list and that the TAC to which the target cell belongs is not in an old TAC LIST, initiate a first TAU procedure, set duration of a timer T3430 to a maximum value in a calling state, and hold the call.

It may be understood that, the target cell is a cell to which the terminal device is handed over. Therefore, if a TAC of the target cell belongs to a new TAC LIST, the terminal device needs to initiate the first TAU procedure to an MME. In addition, in the calling state, the terminal device sets the duration of the timer T3430 to the maximum value, for example, exceeding a statistical average value of call duration for 2 hours for example, to prevent the terminal device from performing local release, from entering a silent state, and from initiating the TAU request again. Specific setting of the maximum value is not specifically limited in this embodiment of this application. The statistical average value of the call duration may be an average value of call duration in statistics of big data.

S713: Determine whether the first TAU is responded in 15s. If the first TAU is responded in 15s, perform step S714: Determine whether the first TAU is accepted. If the first TAU is not responded in 15s, perform step S717: Add the current path to the abnormal switching path list.

It may be understood that, whether the TAU procedure is responded by the MME may be determined within duration of the timer T3430. After the terminal device initiates the first TAU request, the MME may respond or may not respond to the TAU request.

S714: Determine whether the first TAU is accepted. If the first TAU is accepted, perform step S715: Stop the timer T3430, and send a message of completing the first TAU. If the first TAU is not accepted, perform step S716: Stop the timer, and add the current path to the abnormal switching path list.

S715: Stop the timer T3430, and send the message of completing the first TAU.

It may be understood that, after the terminal device initiates the first TAU request, if the TAU is accepted by the MME, the terminal device may send, to the MME, the message indicating that the first TAU procedure is completed.

S716: Stop the timer, and add the current path to the abnormal switching path list.

It may be understood that, if the MME rejects the first TAU request, the terminal device may stop the timer, and add the current path to the abnormal switching path list.

S717: Add the current path to the abnormal switching path list.

It may be understood that, similar to step S712, if the timer T3430 is set to the maximum value, the terminal device does not initiate the TAU procedure again before the timer T3430 expires, so that the current calling state of the terminal device can be not affected.

S718: Initiate a second TAU procedure after the call ends.

It may be understood that, the terminal device initiates the second TAU procedure after the call ends, so that the terminal device can attempt to establish connection with the MME again, to update location information of the terminal device.

S719: Determine whether the call is normally hung up. If the call is normally hung up, perform step S720: Set a penalty level of the current path to a low level. If the call is not normally hung up, perform step S721: Set a penalty level of the current path to a high level.

It may be understood that, after the call of the terminal device ends, the terminal device may set the penalty level of the current switching path by determining whether the previous call is normally hung up.

S720: Set the penalty level of the current path to a low level.

It may be understood that, if the previous call is normally hung up, it indicates that even though the first TAU procedure is not accepted by the MME, the calling state of the current path is not affected. Therefore, the penalty level of the current path may be set to be low, for example, L1 or L2. In this case, next time, there may be a high probability of attempting a switching procedure on the current path.

S721: Set the penalty level of the current path to a high level.

It may be understood that, if the previous call is not normally hung up, the penalty level of the current path may be set to be high, for example, L3 or L4. In this case, next time, a switching procedure on the current path should be avoided as much as possible.

It may be understood that, a reason why the previous call is not normally hung up is not specifically limited in this embodiment of this application.

In the foregoing communication method, in a case in which the target cell is not in the abnormal switching path list, when the first TAU request initiated by the terminal device is not accepted, the terminal device adds the current switching path to the abnormal switching path list. This can provide a basis for subsequent use of the current path, and reduce a call drop rate of subsequent calls. In addition, when the first TAU request initiated by the terminal device is not accepted, if the terminal device is in the calling state, the terminal device sets the set value of the timer T3430 to the maximum value and initiates the TAU procedure again after the call ends, so that a case in which the call is interrupted due to an abnormality of the TAU procedure can be avoided, and the calling state can be maintained. In addition, after the call ends, the penalty level of the current path is set by determining whether the call is normally hung up, to further provide more accurate information for subsequent use of the current path, and reduce the call drop rate of subsequent calls.

### Embodiment 6

Embodiment 6 of this application discloses another communication method. This method differs from the Embodiment 5 in that: In this method, in a case in which the target cell is in the abnormal switching path list, when the first TAU request initiated by the terminal device is accepted, the terminal device removes the current switching path from the abnormal switching path list.

The following describes a procedure of the communication method in Embodiment 1 in detail.

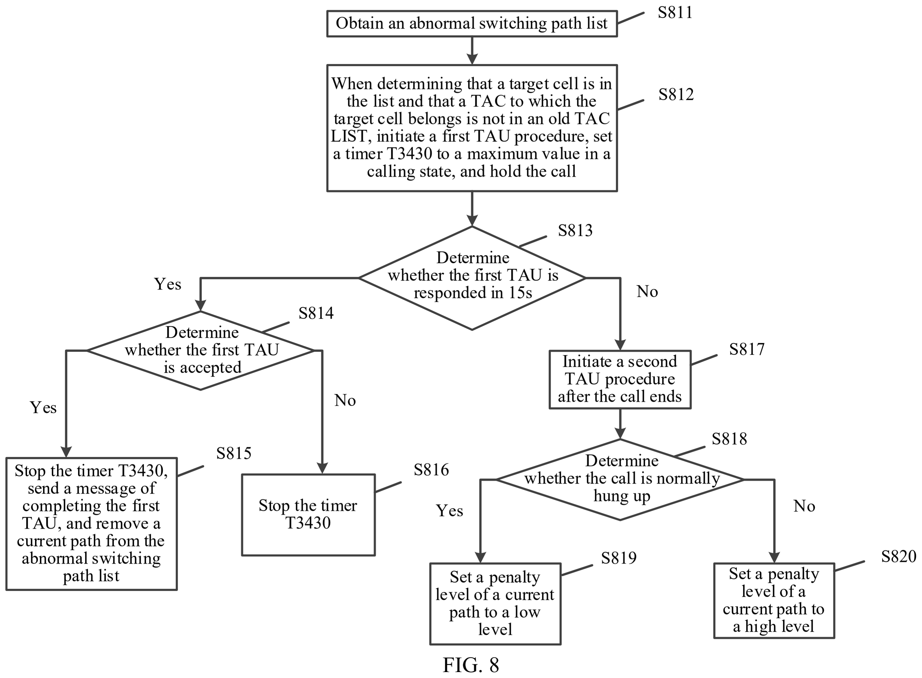

As shown in FIG. 8, a procedure of the communication method disclosed in a specific embodiment of this application may include the following steps:
S811: Obtain an abnormal switching path list.
   It may be understood that, similar to step S401, a grading system of the penalty levels may be set based on an actual scenario, and is not specifically limited in this embodiment of this application.
S812: When determining that a target cell is in the abnormal switching path list and that a TAC to which the target cell belongs is not in an old TAC LIST, initiate a first TAU procedure, set a timer T3430 to a maximum value in a calling state, and hold the call.
   It may be understood that, the target cell is a cell to which the terminal device is handed over, and the TAC of the target cell belongs to a new TAC LIST. Therefore, the terminal device needs to initiate the first TAU procedure to the MME, and set the timer T3430 to the maximum value, to avoid affecting the calling state, and avoid initiating a second TAU procedure.
S813: Determine whether the first TAU is responded in 15s. If the first TAU is responded in 15s, perform step S814: Determine whether the first TAU is accepted. If the first TAU is not responded in 15s, perform step S817: Initiate a second TAU procedure after the call ends.
   It may be understood that, whether the TAU procedure is responded by the MME may be determined within 15s duration of the timer T3430 in the protocol, to obtain an actual status of the current switching path. After the terminal device initiates the first TAU request, the MME may respond or may not respond to the TAU request.
S814: Determine whether the first TAU is accepted. If the first TAU is accepted, perform step S815: Stop the timer T3430, send a message of completing the first TAU, and remove the current path from the abnormal switching path list. If the first TAU is not accepted, perform step S816: Stop the timer T3430.
S815: Stop the timer T3430, send the message of completing the first TAU, and remove the current path from the abnormal switching path list.
   It may be understood that, after the terminal device initiates the first TAU request, if the TAU is accepted by the MME, it indicates that a communication status of the current path is good. Therefore, the terminal device may remove the current path from the abnormal switching path list, and then next time, the current path is still a switching path to be recommended to the terminal device.
S816: Stop the timer T3430.
   It may be understood that, after the terminal device initiates the first TAU request, if the TAU is rejected by the MM E, the timer T3430 may be stopped.
S817: Initiate the second TAU procedure after the call ends.
   It may be understood that, the terminal device may attempt to establish connection with the MME again by initiating the second TAU procedure after the call ends, to update location information of the terminal device.
S818: Determine whether the call is normally hung up. If the call is normally hung up, perform step S819: Set a penalty level of the current path to a low level. If the call is not normally hung up, perform step S820: Set a penalty level of the current path to a high level.
   It may be understood that, after the call of the terminal device ends, the terminal device may alternatively set the penalty level of the current switching path by determining whether the previous call is normally hung up.
S819: Set the penalty level of the current path to a low level.
   It may be understood that, if the previous call is normally hung up, it indicates that the first TAU procedure is not accepted by the MME, but the calling state of the current path is not affected. Therefore, the penalty level of the current path may be set to be low, for example, L1 or L2. If a previous penalty level of the current path is high, the penalty level needs to be adjusted to be lower; or if the previous penalty level of the current path is low, the original penalty level may be maintained, so that next time, there may be a high probability of attempting a switching procedure on the current path.
S820: Set the penalty level of the current path to a high level.

It may be understood that, if the previous call is not normally hung up, the penalty level of the current path may be set to be high, for example, L3 or L4. If a previous penalty level of the current path is low, the penalty level needs to be adjusted to be higher; or if the previous penalty level of the current path is high, the original penalty level may be maintained, so that next time, a switching procedure on the current path should be avoided as much as possible.

It may be understood that, a reason why the previous call is not normally hung up is not specifically limited in this embodiment of this application.

In the foregoing communication method, if the terminal device is in a calling state, the terminal device initiates the first TAU procedure, and sets the set value of the timer T3430 to the maximum value. In a case in which the target cell is in the abnormal switching path list, when the first TAU request initiated by the terminal device is accepted, the terminal device removes the current switching path from the abnormal switching path list, to provide a basis for subsequent use of the current path, so that the terminal device can attempt to communicate through the current path next time. In addition, when the first TAU request initiated by the terminal device is not responded, the terminal device initiates the TAU procedure again after the call ends, so that a case in which the call is interrupted due to an abnormality of the TAU procedure can be avoided, and the calling state can be maintained. In addition, after the call ends, the penalty level of the current path is set by determining whether the call is normally hung up, to further provide more accurate information for subsequent use of the current path, and reduce a call drop rate of subsequent calls.

### Embodiment 7

Embodiment 7 of this application discloses another communication method. In this method, the terminal device is in the calling state, and in a case in which the target cell is in the abnormal switching path list, a probability that the TAU request is rejected by the MME is first determined based on the penalty level. If it is determined that the probability that the TAU procedure is rejected is small, the TAU procedure is initiated, and the penalty level of the current path is set depending on whether the TAU procedure is accepted. Moreover, if it is determined that the probability that the TAU procedure is rejected is large, the TAU procedure is not initiated, and whether transmission and reception of audio/video data packets is normal is monitored. If transmission and reception of the audio/video data packets is normal, the terminal device continues to wait for the call to end, and sets the penalty level of the current path by determining whether the call is normally hung up. However, if transmission and reception of the audio/video data packets is abnormal, and the reason is not a poor signal, the TAU procedure is initiated, and the penalty level of the current path is set depending on whether the TAU procedure is accepted.

The following describes a procedure of the communication method in Embodiment 7 in detail.

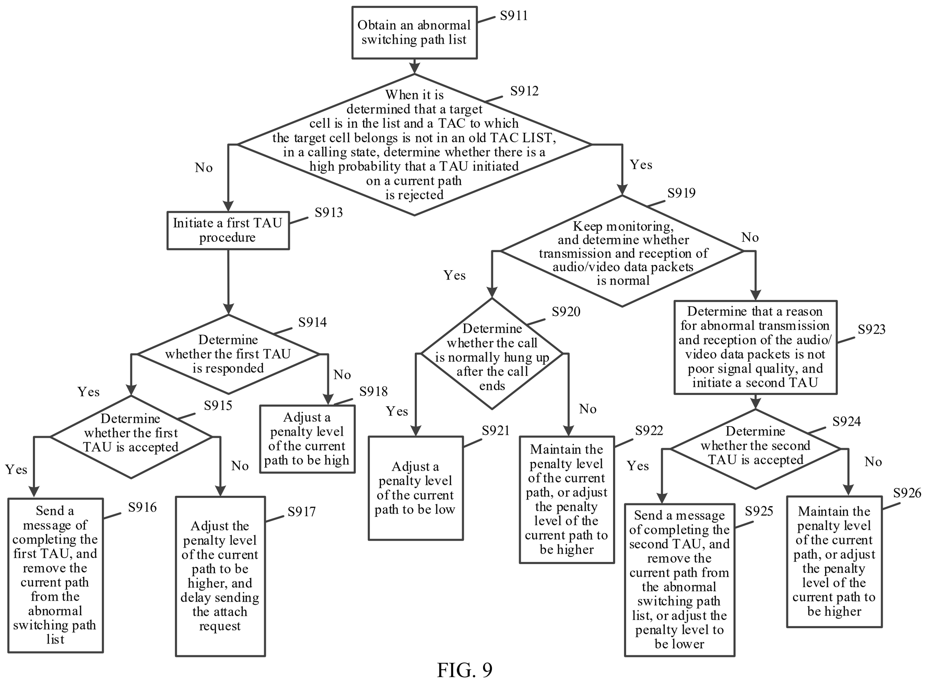

As shown in FIG. 9, a procedure of the communication method disclosed in a specific embodiment of this application may include the following steps:
S911: Obtain an abnormal switching path list.
   It may be understood that, similar to step S401, a grading system of penalty levels may be set based on an actual scenario, and is not specifically limited in this embodiment of this application.
S912: When it is determined that the target cell is in the list and a TAC to which the target cell belongs is not in an old TAC LIST, in a calling state, determine whether there is a high probability that a TAU initiated on the current path is rejected by an MME. If there is not a high probability that the TAU initiated on the current path is rejected by the MME, perform step S913: Initiate a first TAU procedure. If there is a high probability that the TAU initiated on the current path is rejected by the MME, perform step S919: Keep monitoring, and determine whether transmission and reception of audio/video data packets is normal.
   It may be understood that, the target cell is a cell to which the terminal device is handed over, and a TAC of the target cell belongs to a new TAC LIST. Therefore, the terminal device needs to initiate the first TAU procedure to the MME. It may be understood that, whether there is a high probability that the TAU initiated on the current path is rejected may be determined based on the abnormal switching path list and the penalty level. For example, if the penalty level is a high level, such as L3 or L4, it may be determined that there is a high probability that the TAU procedure on the current path is rejected; if the penalty level is a low level, such as L1 or L2, it may be determined that there is a low probability that the TAU procedure on the current path is rejected. A specific determining standard may be determined based on a specific scenario, and a method and a standard for determining the probability are not specifically limited in this embodiment of this application.
S913: Initiate the first TAU procedure.
S914: Determine whether the first TAU is responded. If the first TAU is responded, perform step S915: Determine whether the first TAU is accepted. If the first TAU is not responded, perform step S918: Set the penalty level of the current path to high.
   It may be understood that, whether the TAU procedure is responded by the MME may be determined within duration of a timer T3430. After the terminal device initiates the first TAU request, the MME may respond or may not respond to the TAU request.
S915: Determine whether the first TAU is accepted. If the first TAU is accepted, perform step S916: Send a message of completing the first TAU, and remove the current path from the abnormal switching path list. If the first TAU is not accepted, perform step S917: Adjust the penalty level of the current path to be higher, and delay sending an attach request.
S916: Send the message of completing the first TAU, and remove the current path from the abnormal switching path list.
   It may be understood that, after the terminal device initiates the first TAU request, if the TAU is accepted by the MME, it indicates that a communication status of the current path is good. Therefore, the terminal device may remove the current path from the abnormal switching path list, in other words, next time, the current path is still a switching path to be recommended to the terminal device.
S917: Adjust the penalty level of the current path to be higher, and delay sending the attach request.
   It may be understood that, after the terminal device initiates the first TAU request, if the TAU is not accepted by the MME, it indicates that the communication status of the current path is poor, and the penalty level of the current path may be adjusted to be high, to avoid still switching to the target cell next time as much as possible. In addition, sending of the attach request is delayed in the calling state, to avoid affecting the current call due to initiation of the attach procedure.
S918: Adjust the penalty level of the current path to be high.
   It may be understood that, if the first TAU is not responded, it indicates that the communication status of the current path is poor, and the penalty level of the current path may be adjusted to be high, to avoid still switching to the target cell next time as much as possible.
S919: Keep monitoring, and determine whether transmission and reception of the audio/video data packets is normal. If transmission and reception of the audio/video data packets is normal, perform step S920: Determine whether the call is normally hung up after the call ends. If transmission and reception of the audio/video data packets is not normal, perform step S923: Determine that a reason for abnormal transmission and reception of the audio/video data packets is not poor signal quality, and initiate a second TAU.
   It may be understood that, if it is determined that there is a high probability that the TAU procedure on the current path is rejected by the MME, the TAU procedure may not be initiated, so that the current calling state of the terminal device can be not affected.
S920: Determine whether the call is normally hung up after the call ends. If the call is normally hung up, perform step S921: Adjust the penalty level of the current path to be low. If the call is not normally hung up, perform step S922: Maintain the penalty level of the current path, or adjust the penalty level of the current path to be higher.
   It may be understood that, when the TAU procedure is not initiated and the current call is not affected, the penalty level of the current path may be adjusted by analyzing the current call situation after the call ends, to update switching information of the current path.
S921: Adjust the penalty level of the current path to be low.
   It may be understood that, if the call is normally hung up, it indicates that even if the TAU procedure is not initiated, call quality of the current path is not affected. In this case, the penalty level of the current path may be adjusted to be low, and next time, the terminal device may still attempt on the current switching path.
S922: Maintain the penalty level of the current path, or adjust the penalty level of the current path to be higher.
   It may be understood that, if the call is not normally hung up, it indicates that the current path actually has a serious quality problem, and the penalty level of the current path may be maintained or adjusted to be higher, to avoid a case in which the terminal device is handed over to the target cell on the current path next time as much as possible.
S923: Determine that the reason for abnormal transmission and reception of the audio/video data packets is not poor signal quality, and initiate the second TAU.
   It may be understood that, if the reason for abnormal transmission and reception of the audio/video data packets is not poor signal quality, it indicates that the TAU procedure needs to be initiated, and the terminal device may attempt to initiate the TAU procedure again, to attempt to restore normal connection with the network.
S924: Determine whether the second TAU is accepted. If the second TAU is accepted, perform step S925: Send a message of completing the second TAU, and remove the current path from the abnormal switching path list, or adjust the penalty level of the current path to be lower. If the second TAU is not accepted, perform step S926: Maintain the penalty level of the current path, or adjust the penalty level of the current path to be higher.
   It may be understood that, the communication quality of the current path may be evaluated again depending on whether the second TAU is accepted by the MME.
S925: Send a message of completing the second TAU, and remove the current path from the abnormal switching path list, or adjust the penalty level of the current path to be lower.
   It may be understood that, if the second TAU procedure is accepted by the MME, the current path is removed from the abnormal switching path list, or the penalty level of the current path may be set to be low, for example, L1 or L2, so that next time, the terminal device has a high probability of being handed over to the target cell on the current path.

S926: Maintain the penalty level of the current path, or adjust the penalty level of the current path to be higher.

It may be understood that, if the second TAU procedure is not accepted by the MME, then the penalty level of the current path may be maintained or adjusted to be higher, for example, L3 or L4, so that next time, the terminal device avoids a switching procedure on the current path as much as possible.

In the foregoing communication method, in the calling state, and in a case in which the target cell is in the abnormal switching path list, if it is determined that there is a high probability that the TAU procedure is accepted by the MME, it indicates that the signal quality of the current path is good, and initiating the TAU procedure may not affect the calling state. In addition, the penalty level of the current path is set depending on whether the TAU procedure is accepted by the MME, to update the abnormal switching path list and the penalty level, to provide a basis for a subsequent switching procedure, and reduce a call drop rate of subsequent calls. In addition, if it is determined that there is a low probability that the TAU procedure is accepted by the MME, whether the TAU procedure is initiated is determined by monitoring whether transmission and reception of the audio/video data packets is normal, and in a case in which transmission and reception of the audio/video data packets is normal, after the call ends, the penalty level of the current path is set by determining whether the call is normally hung up, so that the current calling state is not affected, and the abnormal switching path list and the penalty level can also be updated, to reduce a call drop rate of subsequent calls. However, if the reason for abnormal transmission and reception of the audio/video data packets is not poor signal quality, it indicates that the TAU procedure needs to be initiated, to attempt to connect to a network, so that the calling state can be restored to normal, next, the TAU procedure is initiated, the penalty level of the current path is set depending on whether the TAU procedure is accepted, and the abnormal switching path list and the penalty level are updated, to provide a basis for a subsequent switching procedure, and reduce a call drop rate of subsequent calls.

### Embodiment 8

Embodiment 8 of this application discloses another communication method. In this method, in a non-calling state, for example, in a screen-off state or in an IDLE state, a terminal device increases a determined measured report value of RSRP of a target cell in an abnormal switching path, so that the terminal device is handed over to the target cell and initiates a TAU procedure. Then, the abnormal switching path list and the penalty level are adjusted based on the accept situation of the TAU procedure, to update the abnormal switching path list and the penalty level, to provide a basis for a next switching procedure of the terminal device.

The following describes a procedure of the communication method in Embodiment 1 in detail.

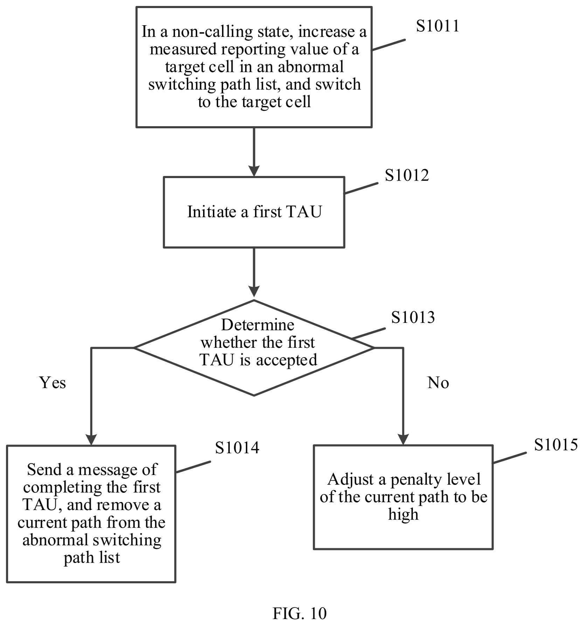

As shown in FIG. 10, a procedure of the communication method disclosed in a specific embodiment of this application may include the following steps:
S1011: In a non-calling state, increase a measured report value of a target cell in an abnormal switching path list, and switch to the target cell.
   It may be understood that, similar to step S401, a grading system of penalty levels and an adjusted measured report value of RSRP may be set based on an actual scenario, and are not specifically limited in this embodiment of this application. It may be understood that, in the non-calling state, the measured report value of the target cell in the abnormal switching path list may be increased, so that the terminal device is handed over to the target cell, to detect whether a problem still exists in a current path.
S1012: Initiate a first TAU.
   It may be understood that, whether the TAU procedure is accepted by the MME may be determined within duration of a timer T3430.
S1013: Determine whether the first TAU is accepted. If the first TAU is accepted, perform step S1014: Send a message of completing the first TAU, and remove the current path from the abnormal switching path list. If the first TAU is not responded, perform step S1015: Set the penalty level of the current path to high.
   It may be understood that, after the terminal device initiates the first TAU request, the MME may respond or may not respond to the TAU request.
S1014: Send the message of completing the first TAU, and remove the current path from the abnormal switching path list.
   It may be understood that, after the terminal device initiates the first TAU request, if the TAU is accepted by the MME, it indicates that a communication status of the current path is good. Therefore, the terminal device may remove the current path from the abnormal switching path list, to update the abnormal switching path list, and next time, the current path may be a switching path to be recommended to the terminal device.
S1015: Adjust the penalty level of the current path to be high.

It may be understood that, after the terminal device initiates the first TAU request, if the TAU is not accepted by the MME, it indicates that the communication status of the current path is poor, and the penalty level of the current path may be adjusted to be high, for example, L3 or L4, to avoid still switching to the target cell next time as much as possible.

In the foregoing communication method, the terminal device may increase the measured report value of the target cell in the abnormal switching path in the non-calling state, so that the terminal device is handed over to the target cell. Therefore, communication quality of the current path is detected again based on an accept situation of the TAU procedure, to update the abnormal switching path list and the penalty level, to provide a basis for a subsequent switching procedure, and reduce a call drop rate of subsequent calls.

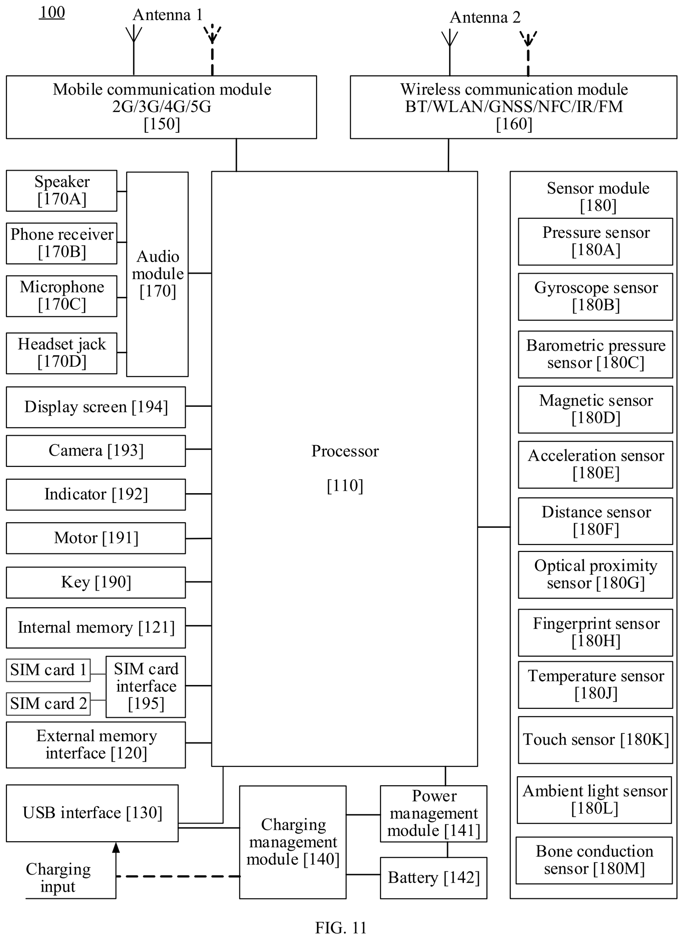

FIG. 11 is a schematic diagram of a structure of a terminal device 100 according to an embodiment of this application. The terminal device 100 may be the terminal device described in the foregoing embodiments.

The terminal device 100 may include a processor 110, an external memory interface 120, an internal memory 121, a universal serial bus (universal serial bus, USB) interface 130, a charging management module 140, a power supply management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, and the like.

It may be understood that an example structure in this embodiment of this application does not constitute a specific limitation on the terminal device 100. The terminal device 100 may include more or fewer components than those shown in the figure, or some components may be combined, or some components may be split, or a different component deployment may be used. The components shown in the figure may be implemented by hardware, software, or a combination of software and hardware.

The processor 110 may include one or more processing units. For example, the processor 110 may include an application processor (application processor, AP), a modem processor (modem), a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors. A memory may further be disposed in the processor 110, configured to store instructions and data.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the terminal device 100 may be configured to cover a single communication frequency band or a plurality of communication frequency bands. Different antennas may further be multiplexed to improve utilization of the antennas. For example, the antenna 1 may be multiplexed as a diversity antenna of a wireless local area network. In some other embodiments, the antenna may be used in combination with a tuning switch.

The mobile communication module 150 can provide a solution for wireless communication including 2G/3G/4G/5G and the like to be applied to the terminal device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave by using the antenna 1 for radiation. In some embodiments, at least some function modules of the mobile communication module 150 may be disposed in the processor 110. In some embodiments, at least some functional modules of the mobile communication module 150 may be disposed in a same device as at least some of modules of the processor 110.

The modem processor may include a modulator and a demodulator. The modulator is configured to modulate a low frequency baseband signal to be sent into a medium and high frequency signal. The demodulator is configured to demodulate the received electromagnetic wave signal into a low frequency baseband signal. Then the demodulator transfers the low frequency baseband signal obtained through demodulation to the baseband processor for processing. The low frequency baseband signal is processed by the baseband processor and then transferred to the application processor. The application processor outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and is disposed in a same device as the mobile communication module 150 or another function module. In some embodiments, the terminal device 100 may include two modem processors. One processor corresponds to 4G, and the other processor corresponds to 5G, or the two corresponds to different network standards.

The wireless communication module 160 may provide a solution for wireless communication to be applied to the terminal device 100, including a wireless local area network (wireless local area network, WLAN) (such as a wireless fidelity (wireless fidelity, Wi-Fi) network), Bluetooth (bluetooth, BT), and the like. The wireless communication module 160 may be one or more components integrating at least one communication processing module. The wireless communication module 160 receives an electromagnetic wave through the antenna 2, performs frequency modulation and filtering on the electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave by using the antenna 2 for radiation.

In some embodiments, in the terminal device 100, the antenna 1 is coupled to the mobile communication module 150, and the antenna 2 is coupled to the wireless communication module 160, so that the terminal device 100 can communicate with a network and another device by using a wireless communication technology. The wireless communication technology may include technologies such as GSM, GPRS, CDMA, WCDMA, TD-SCDMA, LTE, NR, BT, WLAN, NFC, FM, and/or IR.

The terminal device 100 implements a display function by using the GPU, the display screen 194, the application processor, and the like. The GPU is a microprocessor for image processing and connects the display screen 194 and the application processor. The GPU is configured to perform mathematical and geometric calculations, and is configured to render graphics. The processor 110 may include one or more GPUs that execute program instructions to generate or change display information.

The display screen 194 is configured to display an image, a video, and the like. The display screen 194 includes a display panel.

The terminal device 100 may implement a photographing function by using the ISP, the camera 193, the video codec, the GPU, the display screen 194, the application processor, and the like. The ISP is configured to process data fed back by the camera 193. The camera 193 is configured to capture a still image or video. The digital signal processor is configured to process a digital signal, and in addition to a digital image signal, the digital signal processor may further process another digital signal. The video encoder and decoder is configured to compress or decompress a digital video.

The internal memory 121 may be configured to store computer-executable program code. The executable program code includes instructions. The internal memory 121 may include a program storage area and a data storage area. The program storage area may store an operating system, an application program needed by at least one function (for example, a sound playback function or an image display function), and the like.

The terminal device 100 can implement an audio function, for example, music playback and recording, by using the audio module 170, the speaker 170A, the phone receiver 170B, the microphone 170C, the headset jack 170D, the application processor, and the like.

The pressure sensor 180A is configured to sense a pressure signal, and may convert the pressure signal into an electrical signal. In some embodiments, the pressure sensor 180A may be disposed on the display screen 194.

The touch sensor 180K is also referred to as a "touch panel". The touch sensor 180K may be disposed on the display screen 194. The touch sensor 180K and the display screen 194 form a touchscreen, which is also referred to as a "touch screen". The touch sensor 180K is configured to detect a touch operation on or near the touch sensor 180K. The touch sensor may transfer the detected touch operation to the application processor to determine a type of the touch event. The touch sensor 180K may provide a visual output related to the touch operation by using the display screen 194. In some other embodiments, the touch sensor 180K may also be disposed on a surface of the terminal device 100 at a position different from that of the display screen 194.

The SIM card interface 195 is configured to be connected to a SIM card, for example, a SIM card 1 and a SIM card 2. The SIM card may be inserted into the SIM card interface 195 or plugged from the SIM card interface 195 to come into contact with or be separated from the terminal device 100. The terminal device 100 may support 1 or N SIM card interfaces. N is a positive integer greater than 1. The SIM card interface 195 can support a nano SIM card, a micro SIM card, a SIM card, and the like. A plurality of cards may be inserted into a same SIM card interface 195 at the same time. The plurality of cards may be of a same type or different types. The SIM card interface 195 may further be compatible with different types of SIM cards. The SIM card interface 195 may also be compatible with an external memory card.

The terminal device 100 interacts with a network by using the SIM card, to implement a call function, a data communications function, and the like. In some embodiments, the terminal device 100 uses an eSIM, namely, an embedded SIM card. The eSIM card may be embedded in the terminal device 100, and cannot be separated from the terminal device 100.

The terminal device 100 in this embodiment of this application may also be referred to as a user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like. For example, the terminal device may be a handheld device or an in-vehicle device having a wireless connection function Currently, some examples of the terminal device include a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, or a personal digital assistant (personal digital assistant, PDA). By way of example and not limitation, in this embodiment of this application, the terminal device may alternatively be a wearable device. The wearable device may also be referred to as a wearable smart device, and is a collective term for wearable devices developed by intelligently designing daily wearing based on a wearable technology, for example, glasses, gloves, a watch, clothing, and shoes. A wearable device is a portable device that can be directly worn on a body or integrated into clothes or an accessory of a user. The wearable device is not only a hardware device, but also used to implement a powerful function through software support, data exchange, and cloud interaction. In a broad sense, wearable intelligent devices include full-featured and large-size devices that can implement complete or partial functions without depending on smartphones, such as smart watches or smart glasses, and devices that focus on only one type of application function and need to be used together with other devices such as smartphones, such as various smart bands or smart jewelry for monitoring physical signs.

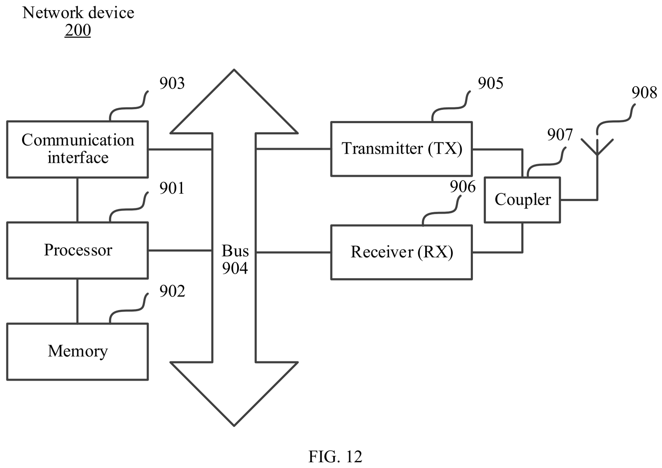

FIG. 12 is a schematic diagram of a structure of a network device 200 according to an embodiment of this application. In some embodiments, the network device 200 may be any base station in the foregoing embodiments.

As shown in FIG. 12, the network device 200 may include one or more processors 901, a memory 902, a communications interface 903, a transmitter 905, a receiver 906, a coupler 907, and an antenna 908. These components may be connected through a bus 904 or in another manner. An example in which these components are connected through the bus is used in FIG. 12.

The communication interface 903 may be used by the network device 200 to communicate with another communication device such as a terminal device, a 5G core (5GC), or another network device. Specifically, the communication interface 903 may be a 5G or future new radio communication interface. In addition to a wireless communication interface, the network device 200 may also be provided with a wired communication interface 903 to support wired communication, for example, a backhaul link between one network device 200 and another network device 200 may be a wired communication connection.

In some embodiments of this application, the transmitter 905 and the receiver 906 may be considered as a wireless modem.

The transmitter 905 may be configured to transmit a signal that is output by the processor 901. The receiver 906 may be configured to receive a signal. In the network device 200, there may be one or more transmitters 905 and receivers 906. The antenna 908 may be configured to convert electromagnetic energy in a transmission line into an electromagnetic wave in free space, or to convert an electromagnetic wave in free space into electromagnetic energy in a transmission line. The coupler 907 may be configured to divide a mobile communication signal into a plurality of paths, which are allocated to a plurality of receivers 906. It may be understood that the antenna 908 of the network device may be implemented as a large-scale antenna array.

The memory 902 is coupled to the processor 901, and is configured to store various software programs and/or a plurality of instructions. Specifically, the memory 902 may include a high-speed random access memory, and may also include a non-volatile memory, such as one or more magnetic disk storage devices, a flash memory device, or another non-volatile solid-state storage device.

The memory 902 may store an operating system (a system for short below), for example, an embedded operating system such as uCOS, VxWorks, or RTLinux. The memory 902 may further store a network communications program, and the network communications program may be configured to communicate with one or more additional devices, one or more terminal devices, and one or more network devices.

In this embodiment of this application, the processor 901 may be configured to: read and execute computer-readable instructions. Specifically, the processor 901 may be configured to: invoke the program stored in the memory 902, for example, a program of implementing, on a side of the network device 200, the network searching method in a dual-card terminal scenario provided in the one or more embodiments of this application, and execute instructions included in the program.

It should be noted that the network device 200 shown in FIG. 12 is merely an implementation of this embodiment of this application. In actual application, the network device 200 may further include more or fewer components. This is not limited herein.

Various implementations of this application may be combined randomly to achieve different technical effects.

Optionally, in some embodiments, embodiments of this application further provide a computer-readable medium, storing program code, the computer program code, when run on a computer, causing the computer to perform the method according to the foregoing aspects.

Optionally, in some embodiments, embodiments of this application further provide a computer program product, including computer program code, the computer program code, when run on a computer, causing the computer to perform the method according to the foregoing aspects.

It may be understood that, the network device 200 may include a 4G base station, a 4G core network (evolved packet core, EPC) device, and the like. The 4G base station is connected to the EPC device, and there may be one or more 4G base stations and EPC devices. It may be understood that, the 4G base station may include an evolved NodeB (evolved NodeB, eNB), gNB, an access point (access point, AP), a transmission reception point (transmit/receive point, TRP), a central unit (central unit, CU), or another network entity. The EPC device may include a mobility management entity (mobility management entity, MME), a serving gateway (serving gateway, SGW), a packet data network gateway (packet data network gateway, PGW), a home subscriber server (home subscriber server, HSS), an application server, and the like. As a key control node of a 3GPP LTE access network, the MME is mainly configured to provide access control, mobility management, attachment and detachment, session management, and the like for the terminal device 100, and is responsible for locating a user equipment (user equipment, UE) in an idle state and a calling process, including relaying, in other words, is responsible for a signaling processing part.

It may be understood that, the network device 200 may further include a 5G base station (gNB) or a transmission point (TRP or TP) in a fifth generation (the fifth generation, 5G) system, for example, a new radio (new radio, NR) system, one antenna panel or a group of antenna panels (including a plurality of antenna panels) of a base station in the 5G system, or may be a network node, for example, a baseband unit (BBU) or a distributed unit (distributed unit, DU), constituting a gNB or a transmission point. The 5G base station may include a macro base station, a micro base station, a relay station, an access point, or the like in various forms. In systems using different radio access technologies, names of devices having a function of a base station may be different.

The technical solution in embodiments of this application is applicable to various communication systems, for example, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (universal mobile telecommunication system, UMTS), a worldwide interoperability for microwave access (worldwide interoperability for microwave access, WiMAX) communication system, a wireless local area network (wireless local area network, WLAN), a wireless fidelity (wireless fidelity, Wi-Fi) system, a fifth generation (5th generation, 5G) mobile communication system, a next generation communication system, or another communication system. The 5G mobile communication system may include non-standalone (non-standalone, NSA) networking and/or standalone (standalone, SA) networking.

The technical solution provided in embodiments of this application is further applicable to a machine type communication (machine type communication, MTC), a long term evolution-machine (long term evolution-machine, LTE-M), a device-to-device (device-to-device, D2D) network, a machine to machine (machine to machine, M2M) network, an internet of things (internet of things, IoT) network, or another network. The IoT network may include, for example, the internet of vehicles. Communication methods in the internet of vehicles system are collectively referred to as a vehicle-to-X (vehicle to X, V2X, where X may represent everything) system. For example, V2X may include: vehicle-to-vehicle (vehicle to vehicle, V2V) communication, vehicle-to-infrastructure (vehicle to infrastructure, V2I) communication, vehicle-to-pedestrian (vehicle to pedestrian, V2P) communication, or vehicle-to-network (vehicle to network, V2N) communication. The technical solution provided in this application is also applicable to a future communication system, for example, a sixth mobile communication system. This is not limited in this application.

In embodiments of this application, an apparatus for implementing a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete device. In the technical solution provided in embodiments of this application, the technical solution provided in embodiments of this application is described by using an example in which an apparatus for implementing the function of the terminal is a terminal device.

Various storage media described in this specification may indicate one or more devices and/or other machine-readable media that is used to store information. The term "machine-readable media" may include but is not limited to a radio channel, and various other media that can store, contain and/or carry an instruction and/or data.

Although the present invention has been illustrated and described with reference to some preferred embodiments of the present invention, a person of ordinary skill in the art should understand that various modifications may be made to the embodiments in form and detail without departing from the scope of the present invention.

## Claims

1. A communication method, applied to an electronic device, wherein the method comprises:
detecting that an electronic device is handed over from a first cell to a second cell;
initiating a first communication cell update request; and
in response to a call hold condition being satisfied, holding a calling state of the electronic device, wherein the call hold condition comprises that the electronic device is currently in the calling state.

2. The method according to claim 1, wherein the call hold condition further comprises: within preset duration of a timer T3430, a message indicating that the first communication cell update request is responded is not received, wherein the first communication cell update request comprises a first tracking area update request, and the timer T3430 is configured to time the first communication cell update request.

3. The method according to claim 2, wherein the call hold condition further comprises: transmission and reception of data packets of the call being normal.

4. The method according to claim 1, further comprising:
in response to the call hold condition being not satisfied, performing local release and sending a second communication cell update request in advance.

5. The method according to claim 4, the sending a second communication cell update request in advance comprises:
reducing a set value of a timer T3411, wherein the timer T3411 is configured to set time for sending the second communication cell update request.

6. The method according to claim 4, wherein that the call hold condition being not satisfied comprises:
the first communication cell update request is not responded, and the electronic device is not currently in the calling state; or
the first communication cell update request is not responded, the electronic device is currently in the calling state, and transmission and reception of data packets of the call is abnormal.

7. The method according to claim 6, further comprising:
in response to the second communication cell update request being accepted, setting a penalty level of a path through which the first cell is switched to the second cell to a first penalty level; and
in response to the second communication cell update request being not accepted, setting the penalty level of the path through which the first cell is switched to the second cell to a second penalty level, wherein
the second penalty level is higher than the first penalty level, and a higher penalty level indicates a lower probability of the path being used.

8. The method according to claim 1, further comprising:
when detecting that the calling state of the electronic device ends, determining an ending manner of the calling state;
in response to the ending manner of the calling state being normally hanging up, setting a penalty level of a path through which the first cell is switched to the second cell to a third penalty level; and
in response to the ending manner of the calling state being abnormally hanging up, setting the penalty level of the path through which the first cell is switched to the second cell to a fourth penalty level, wherein
the fourth penalty level is higher than the third penalty level, and a higher penalty level indicates a lower probability of the path being used.

9. The method according to claim 7 or 8, wherein the penalty level is for adjusting a measured report value of reference signal received power used by the electronic device in a cell switching process.

10. The method according to claim 1, wherein the holding a calling state of the electronic device comprises:
suspending sending a second communication cell update request.

11. The method according to claim 10, the suspending sending a second communication cell update request comprises:
adjusting a value of a set value of a timer T3430 from a first preset value to a second preset value, wherein the second preset value is greater than a statistical average value of call duration.

12. The method according to claim 1, wherein the in response to a call hold condition being satisfied, holding a calling state of the electronic device comprises:
holding an RRC connection of the electronic device, skipping performing local release, and skipping starting a timer T3411.

13. The method according to claim 1, further comprising:
in correspondence to the first communication cell update request being not responded to or being rejected and a path through which the first cell is switched to the second cell being not in an abnormal switching path list, adding the path through which the first cell is switched to the second cell to the abnormal switching path list, wherein during communication, a probability of selecting a path in the abnormal switching path list is less than a probability of selecting a path that is not in the abnormal switching path list.

14. The method according to claim 13, further comprising:
in response to the first communication cell update request being received and the path through which the first cell is switched to the second cell being in the abnormal switching path list, removing, from the abnormal switching path list, the path through which the first cell is switched to the second cell.

15. A communication apparatus, comprising one or more processors and one or more memories, wherein
the one or more memories are coupled to the one or more processors, the one or more memories are configured to store computer program code, the computer program code comprises computer instructions, and the one or more processors, when executing the computer instructions, enable the apparatus to perform the communication method according to any one of claims 1 to 14.

16. A chip, wherein the chip comprises a processor, and the processor executes computer instructions stored in a computer storage medium, to enable an electronic device to implement the communication method according to any one of claims 1 to 14.
